# EUROPÄISCHE PATENTSCHRIFT

(11) **EP 2 321 154 B1**
(45) Veröffentlichungstag und Bekanntmachung des Hinweises auf die Patenterteilung: **27.04.2016**
(21) Anmeldenummer: 09775961.7
(22) Anmeldetag: 10.07.2009
(51) Int. Cl.: B60R 21/201, B60R 21/207, B60R 21/2165, B60R 21/231

(54) **AIRBAGMODUL UND SITZ DAMIT SOWIE FERTIGUNGSEINRICHTUNG UND MONTAGEVERFAHREN DAFÜR**
AIRBAG MODULE AND SEAT RELATED THERETO, AND ALSO MANUFACTURING APPARATUS AND ASSEMBLY METHOD THEREFORE
MODULE D'AIRBAG ET SIÈGE ASSOCIÉ, ET DISPOSITIF DE PRODUCTION ET PROCÉDÉ DE MONTAGE CORRESPONDANTS

(30) Priorität: 10.07.2008 DE 202008009238 U; 21.08.2008 DE 202008011106 U; 28.11.2008 DE 202008015836 U; 10.03.2009 DE 202009003420 U
(43) Veröffentlichungstag der Anmeldung: 18.05.2011
(73) Patentinhaber: Faurecia Autositze GmbH, 31655 Stadthagen (DE)
(72) Erfinder: MÜLLER, Helmut, 65428 Rüsselsheim (DE)
(74) Vertreter: Bremer, Ulrich
(86) Internationale Anmeldenummer: PCT/DE2009/000976
(87) Internationale Veröffentlichungsnummer: WO 2010/003407

(56) Entgegenhaltungen:
- EP-A- 0 782 944
- WO-A-2005/102789
- WO-A-2007/042011
- WO-A-2008/095485
- DE-A1- 10 307 480
- DE-A1- 19 860 840
- DE-A1-102007 000 291

## Beschreibung

Die Erfindung betrifft ein Airbagmodul, einen Sitz mit einem solchen Airbagmodul sowie eine Fertigungseinrichtung und ein Montageverfahren für ein solches Airbagmodul.

Die auf den vorliegenden Anmelder zurück gehende vorveröffentlichte Anmeldung DE 19860840 Al und das dazu parallele US-amerikanische Patent US 6,299,197 sowie die PCT-Anmeldungen WO 2005/102789 A1 und WO 2007/042011 A2 betreffen Airbagmodule und deren Montageverfahren jeweils unter einem Sitzbezug, mit einem Reißband, um den Sitzbezug laufmaschenartig mit einem Reißband zu öffnen, damit der Airbag des Airbagmoduls leicht, einfach und definiert austreten kann und somit seine Schutzwirkung optimal ausüben kann. Die Offenbarungsgehalte aller dieser vorveröffentlichten Schutzrechtsanmeldungen sind zur Vermeidung bloßer Wiederholungen hiermit durch Bezugnahme vollumfänglich in den vorliegenden Unterlagen aufgenommen, insbesondere hinsichtlich den Gestaltungen, Anordnungen und Montagen sowie Funktionen des Reißbandes.

Die EP 0 782 944 A1 beschreibt eine Seitenairbag-Vorrichtung, gemäß der Oberbegriff des Patentanspruchs 1, und einen Seitenairbag, der einen vernähten Teil eines Sitzbezug-Materials durch den Expansionsdruck des Airbags öffnet. Ein gürtelartiger Körper zum Konzentrieren des Expansionsdruckes des Airbags bei dessen Expansion dient dagegen dem vernähten Bereich durch Aufreißen zu öffnen.

Die DE 10 2007 000 291 A1 beschreibt ein Airbaggerät für eine Airbagbaugruppe, die in einer Rückenlehne des Fahrzeugsitzes eingebaut ist und einen aufblasbaren Airbag aufweist, der einer Außenseite des Fahrzeugs zugewandt ist. Wenn der Airbag aufgeblasen und gefaltet wird, dringt der erste Airbagabschnitt des Airbags in einer seitlichen Spitze der Rückenlehne schräg nach vorne und in das weiter das weiter in das Insassenabteil.

Die WO 2005/102789 beschreibt eine Thorax-Airbageinrichtung, die gehäuselos zwischen einem Umlenkbügel und einem Laufmaschenreißband vorgesehen ist. Die WO 2008/095485 A1 beschreibt ein weiteres Airbagsystem mit einem Airbagmodul, das eine Öffnungstechnik der Airbagaufreißnaht eines Sitzbezuges für den unter dem Bezug nicht sichtbar untergebrachten Airbag enthält, wobei die Öffnungstech-nik derartig gestaltet ist, dass die Entfaltungskraft des Airbags Löcher in die Aufreißnaht reißt, um ein leichteres Öffnen der Naht zu bewirken.

Die vorliegende Erfindung hat und erreicht das Ziel, die Reißbandtechnik weiter zu verbessern. Die einzelnen erfindungsgemäße Lösungen dazu sind in den beigefügten selbständigen Ansprüchen angegeben.

Somit schafft die Erfindung ein Airbagmodul mit einem Reißband zur gezielten Öffnung eines Sitzbezuges, unter dem das Airbagmodul zu montieren ist, wobei eine Mehrzahl von Reißbändern vorgesehen ist.

Hierzu ist ein Airbagmodul mit den Merkmalen des Anspruchs 1 vorgesehen; weiterhin wird ein Fahrzeugsitz mit diesem Airbagmodul, und ein Montageverfahren für ein derartiges Airbagmodul geschaffen.

Bevorzugt ist dabei, wenn ferner eine Gewebebahn enthalten und derart gestaltet ist, dass beliebig viele Reißbänder enthalten sind oder entstehen, und/oder dass die Reißkraft und die Kraft zum Öffnen der Laufmaschen ausbalanciert sind. Alternativ dazu ist es bevorzugt, wenn eine Gewebebahn enthalten und derart gestaltet ist, dass mehrere, vorzugsweise wenigstens zwei Reißbänder zu einem breiten Band zusammengefasst sind.

Ferner kann vorzugsweise vorgesehen sein, dass eine Gewebebahn enthalten und derart gestaltet ist, dass sie breite Bänder enthält, die zusammen mit ihren Zwischenräumen eine Verschachtelung weiterer Gewebebahnen ermöglichen.

Hierbei ist vorgesehen, wenn eine Reißbandbreite und eine Stichlänge derart abgestimmt sind, dass einerseits pro Reißband nur ein Stich durchgerissen wird, und andererseits die Stiche nicht neben das Reißband gesetzt werden, wobei insbesondere die Reißbandbreite etwa 6 mm und die Stichlänge 4 mm bis 5 mm betragen.

Die Erfindung schafft auch einen Sitz, der dadurch gekennzeichnet ist, dass ein Airbagmodul nach einem der vorhergehenden Ansprüche enthalten ist.

Weiterhin schafft die Erfindung ein Montageverfahren für ein Airbagmodul, wobei ein Airbagmodul mit mehreren Reißbändern zur gezielten Öffnung eines Sitzbezuges unter dem Sitzbezug montiert wird.

Die Erfindung schafft auch ein Airbagmodul mit einer Reißbandmanschette, wobei die Reißbandmanschette derart zugeschnitten ist, dass die Kett- und/oder-Schussfäden gesteuert durch den Zuschnitt jeweils in der Zugrichtung der Reißkraft zu liegen kommen, damit seitlich keine Fäden ausscheren.

Ferner schafft die Erfindung ein Airbagmodul mit einer Reißbandmanschette, wobei die Reißbandmanschette derart ausgeführt ist, dass Reißbänder im "rechten" Winkel zueinander stehen, d.h. die die Kraft aufnehmenden Fäden (in einem Reißband die Schussfäden und im anderen die Kettfäden) die Reißkraft übernehmen.

Noch weiter wird durch die Erfindung ein Airbagmodul mit einer Reißbandmanschette geschaffen, wobei die Reißbandmanschette derart gestaltet ist, dass sie ohne Änderung am linken und rechten Sitz verwendet werden kann.

Es wird ferner durch die Erfindung eine Fertigungseinrichtung für eine Reißbandmanschette eines vorgenannten Airbagmoduls geschaffen, wobei eine "kammartig" ausgeführte Platte enthalten ist, die simultan gleichzeitig mit nur einer Bewegung alle Reißbänder durch deren zugeordneten Schlitze schiebt.

Bei einem weiteren durch die Erfindung geschaffenen Montageverfahren für ein Airbagmodul ist vorgesehen, dass eine Reißbandmanschette durch Schneiden mit einem Heißmesser derart gestaltet wird, dass die Enden der schmalen Reißbänder als Maßnahme gegen Ausreißen der Fäden am Ende derselben verschmelzen.

Bei einem weiteren erfindungsgemäßen Airbagmodul, insbesondere gemäß den vorher genannten Ausgestaltungen, ist vorgesehen, dass zur besseren Montage die kleinen Reißbänder als Fortsetzung der breiten Reißbänder mit einem Quersteg miteinander verbunden sind, derart dass es eine stabile Einheit gibt, bei der die kleinen Reißbänder zum heiß verschweißen exakt in Position gehalten werden.

Die letztere Variante kann dadurch mit Vorzug weiter ausgestaltet sein, dass die Reißbänder mit einem Quersteg miteinander verbunden sind, damit diese Einheit in ein Positionierblech eingehängt werden kann vor dem Schweißvorgang, und/oder dass der Quersteg derart ausgeführt ist, dass dieser dann mit dem Heißmesser abgetrennt wird und die "kleinen" Reißbänder in der vorbestimmten Lage an der Unterseite der Manschette festbacken.

Bei einem weiteren erfindungsgemäßen Montageverfahren für ein Airbagmodul, insbesondere gemäß den vorher genannten Ausgestaltungen, ist vorgesehen, dass ein Festbacken der kleinen Reißbänder derart ausgeführt wird, dass die Näherin ein solides Teil hat zum Beinähen zur Airbagnaht und nicht einzelne Bänder positioniert werden müssen.

Vorrichtungs- und verfahrensmäßig besteht eine weitere bevorzugte Ausgestaltung darin, dass ein Heißschneideprozess derart verwendet wird, dass außer dem Verkleben der kleinen Reißbänder auch noch gleichzeitig deren Enden derart ver-schmolzen werden, dass die Fäden bei Beanspruchung nicht ausreißen, was zu einer verbesserten Kammscherfestigkeit fuhrt.

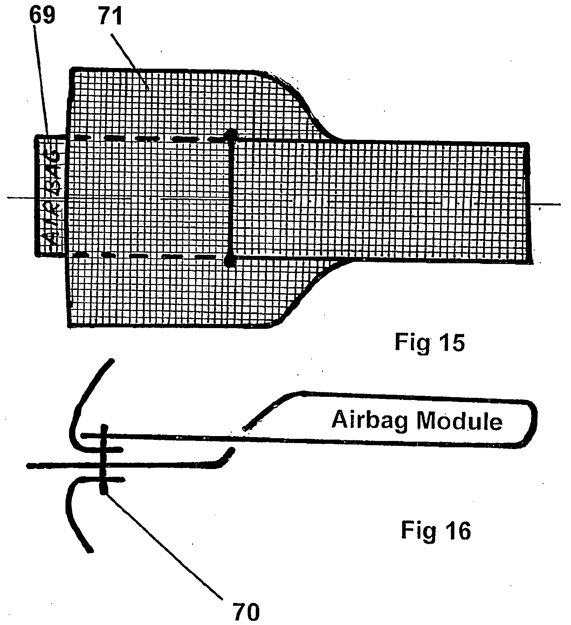

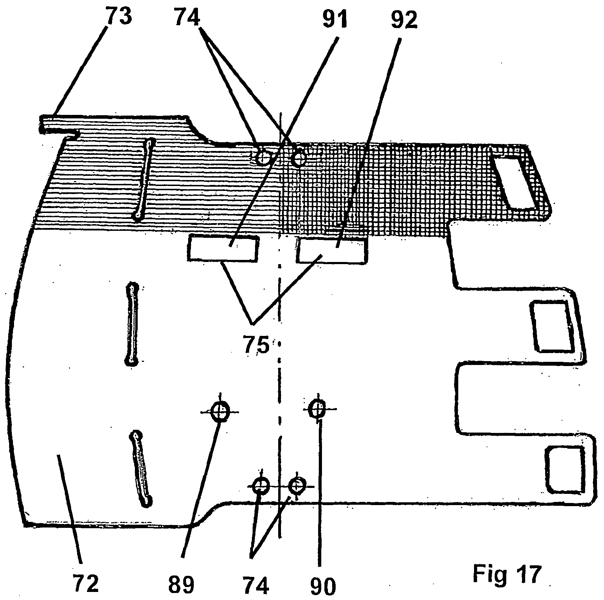

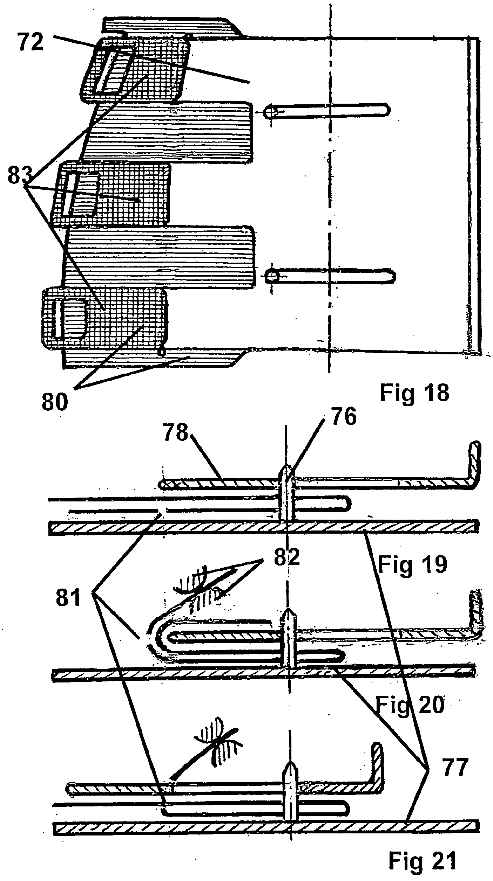

Bei einem noch weiteren erfindungsgemäßen Airbagmodul, insbesondere gemäß den vorher genannten Ausgestaltungen, ist vorgesehen, dass das Reißband derart ausgeführt ist, dass an seinem Ende die Bezeichnung AIRBAG aufgedruckt ist, um ein extra "Label" zu sparen (Fig. 15 und 16). Bei noch einem weiteren erfindungsgemäßen Airbagmodul, insbesondere gemäß den vorher genannten Ausgestaltungen, ist vorgesehen, dass eine Reißbandmanschette derart mit Positionierlöchern versehen ist, dass die gefaltete Manschette in Positionierstiften ihre exakte Position erhält für den Vorgang des Heißschneidens (Fig. 17). Bei einem anderen erfindungsgemäßen Airbagmodul, insbesondere gemäß den vorher genannten Ausgestaltungen, ist vorgesehen, dass eine Manschette derart ausgeführt ist, dass am Anfang der Nähposition dies mit einer Positionierfahne vorgegeben ist. Diese Varianten können mit Vorzug dadurch weiter ausgestaltet sein, dass eine Manschette derart positioniert ist, dass eine "kammartige" Platte alle Reißbänder gleichzeitig und damit parallel durch die vorgegebenen Schlitze schiebt (Fig. 18 bis 21). Eine noch weitere bevorzugte Ausgestaltung in diesem Zusammenhang besteht darin, dass der Herstellungsprozess derart ausgeführt wird, dass die Reißbänder fast automa- - A -tisch in die Positionier- oder Haltebleche fallen als Vorbedingung für eine exakte Position der Reißbänder zum und nach dem Verschweißen.

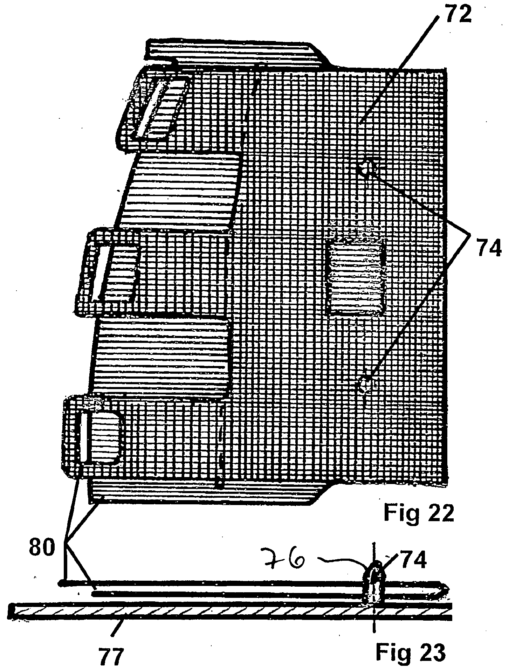

Bei noch einem anderen erfindungsgemäßen Airbagmodul, insbesondere gemäß den vorher genannten Ausgestaltungen, ist vorgesehen, dass eine Manschette derart positioniert und an der Schweißstelle mit "Gegenhaltern" versehen ist, dass eine sachgerechte Verschweißung erfolgt (Fig. 22 bis 25).

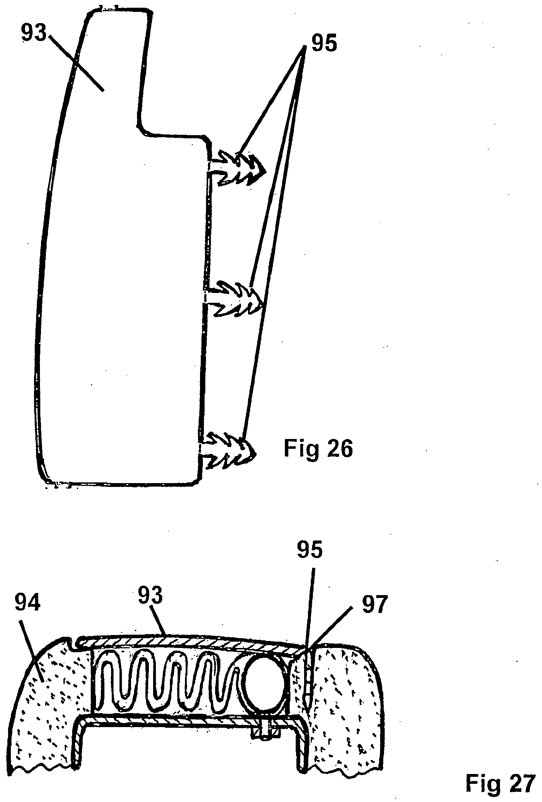

Bei einem weiteren erfindungsgemäßen Airbagmodul, insbesondere gemäß den vorher genannten Ausgestaltungen, ist vorgesehen, dass eine Öffnung im Schaum der Sitzlehne zur Aufnahme des Airbagmoduls derart ausgeführt ist, dass anstelle der Modulschachtel nur der Schachteldeckel in dem Schaum eingeschäumt ist, dass dieser an der Oberfläche exakt abschließt (Fig. 26 bis 27). Vorzugsweise weitere Ausgestaltungen davon bestehen darin, dass eine Integration des Modulkastendeckels derart erfolgt, dass er sich zur Montage des Airbags öffnen und schließen lässt, und/oder dass ein Airbagdeckel derart ausgeführt ist, dass er erst nach der Montage des Airbags in den Schaum eingesteckt wird.

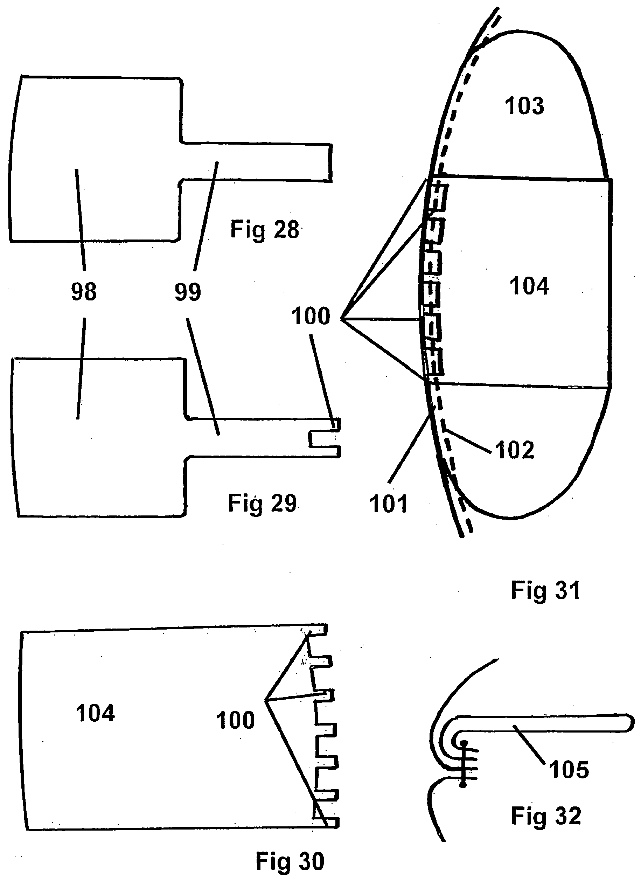

Noch ein anderes erfindungsgemäßes Airbagmodul, insbesondere gemäß den vorher genannten Ausgestaltungen, ist derart, dass eine Reißbandmanschette alternativ derart ausgeführt ist, dass die Reißbänder nicht durch die Schlitze im Unterteil der Manschette gesteckt werden und damit sich lediglich die Reißkraft der Manschette auf vorbestimmte Zonen der Airbagnaht konzentriert (Fig. 28 bis 32). In Weiterbildung davon kann mit Vorzug vorgesehen sein, dass eine Reißbandmanschette derart ausgeführt ist, dass die Anzahl der Reißbänder zweckentsprechend beliebig variabel ist, und/oder dass eine Reißbandmanschette in der Eigenart vorgesehen ist, dass nur ein Teil der Energie des Airbags von den Reißbändern aufgenommen wird, und/oder dass eine Reißbandmanschette in ihrer Eigenart derart wirkend vorgesehen ist, das ein Anteil der Energie des Airbags sich auf die Airbagnaht verteilt und damit nicht für das Reißen von Laufmaschenlöchern zur Verfügung steht, und/oder dass eine Reißbandmanschette in ihrer Eigenart derart ausgeführt ist, dass gleichzeitig die Energie des Airbags erst an der Airbagaustrittsnaht auf die Reißbänder und auf die Naht direkt verteilt wird, und/oder dass die Ausführungsform der Manschette derart ist, dass sie die Energie des Airbags verteilen lässt entsprechend dem Dehnungsverhalten der Bänder zum Dehnungsverhalten des Bezuges, und/oder dass eine Reißbandmanschette in ihrer Wirkungsweise derart funktionierend ausgeführt Ist, dass die Airbagaustrittsnaht erst spät im Moment des Aufschlages des Bags auf die Naht ihre Belastung erfahrt.

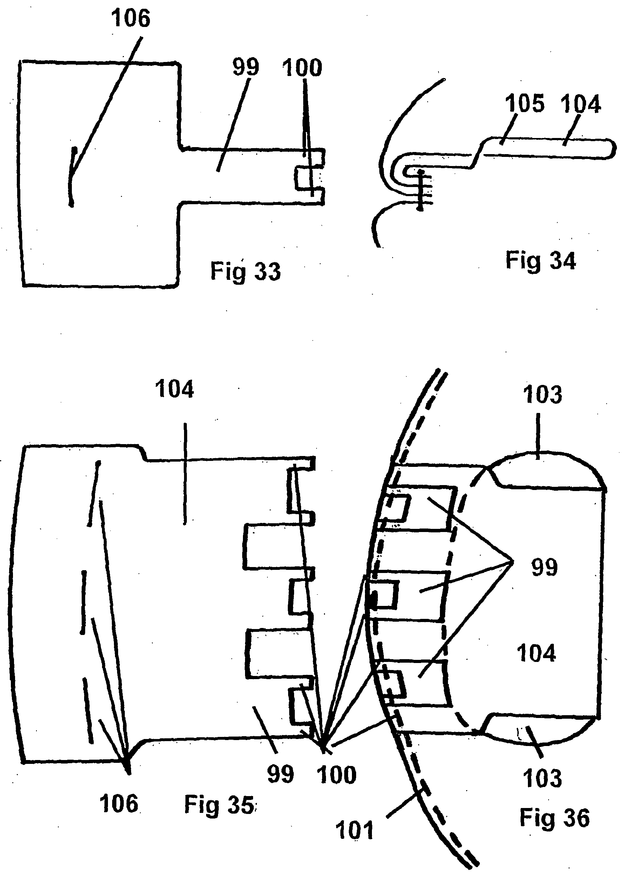

Bei noch einem anderen erfindungsgemäßen Airbagmodul, Insbesondere gemäß den vorher genannten Ausgestaltungen, ist vorgesehen, dass eine Reißbandmanschette derart ausgeführt ist, dass die Reißbänder durch Schlitze gesteckt werden (Fig. 33 bis 36). Dies kann vorzugsweise weiter ausgestaltet sein, indem eine Reißbandmanschette derart ausgeführt ist, dass eine variable Anzahl von Reißbändern zweckentsprechend bedingt durch das Durchstecken der Reißbänder durch die Schlitze einen ziehenden Effekt punktweise in die Airbagnaht aufbringt, und/oder eine Reißbandmanschette derart im Ergebnis ausgeführt ist, dass die Airbagkraft frühzeitig die ganze Energie auf die Reißbänder verteilt, und/oder eine Reißbandmanschette durch die Umlenkung in den Schlitze die Airbagnaht nach hinten zieht.

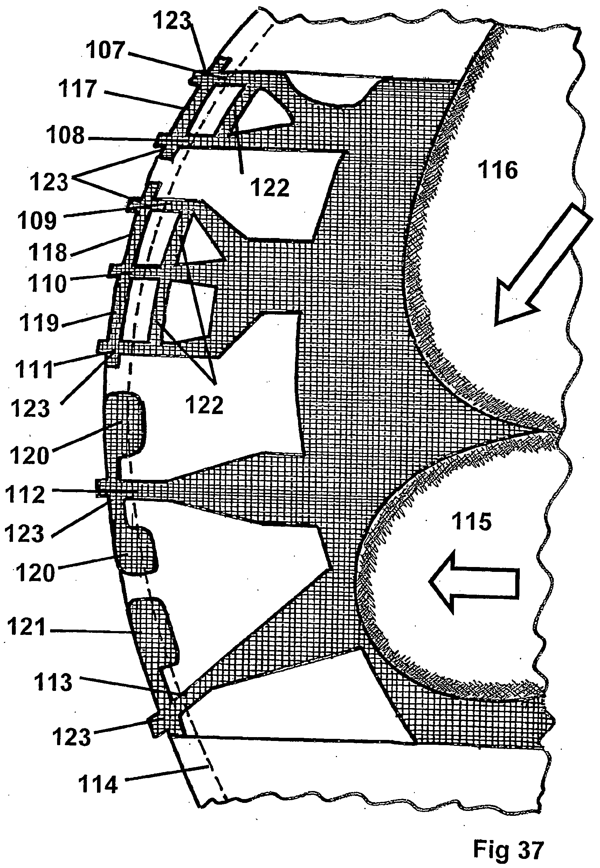

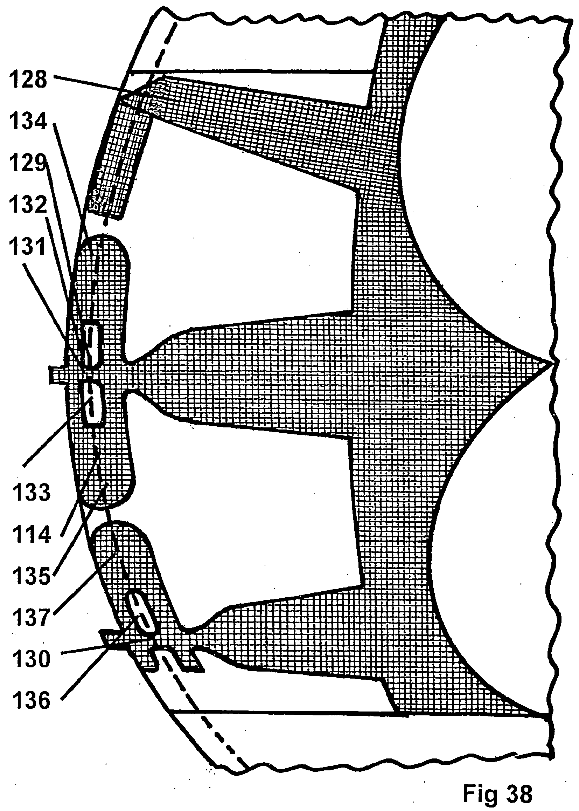

Ein noch weiteres erfindungsgemäßes Airbagmodul, insbesondere gemäß den vorher genannten Ausgestaltungen, ist derart, dass eine Reißbandmanschette derart insbesondere alternativ ausgeführt ist, dass die Reißbänder anstelle von "Laufmaschenlöchern" größere Löcher in die Aufreißnaht "schälen" (Fig. 37 und 38). In Weiterbildung davon ist es bevorzugt, wenn Reißbänder derart ausgeführt sind, dass in einer ersten Phase wie bei den anderen Alternativen kleine Laufmaschenlöcher gerissen werden, wobei weiter vorzugsweise Reißbänder derart ausgeführt sind, dass in einer zweiten Phase ein größeres Loch in die Naht geschält wird zum noch leichteren und gezielten Durchtritt des Bags, wobei ferner insbesondere eine Ausführung der Reißbänder derart vorgesehen ist, dass die Reißbänder seitlich mit unterschiedlichen in die Naht eingenähten "Lappen" versehen sind, zum Reißen der Löcher in der zweiten Phase dienen, wobei außerdem mit Vorzug die Reißbandmanschette derart ausgeführt ist, dass die "Lappen" mit einem zwei oder mehr Stegen alternativ am Reißband angebunden sind und/oder Anbindungen der Lappen mit Stegen derart abgestimmt sind, dass ausreichende "Lose" zum Reißen des Laufmaschenloches vorhanden sind und möglichst wenig nicht gerissene Naht zwischen dem Laufmaschenloch und dem größeren zu schälenden Loch stehen bleibt. Weitere vorzugsweise Ausgestaltungen dieser Varianten bestehen darin, dass die Reißbänder als einzelnes Teil oder als Bündel ausgeführt sind, und/oder dass eine Abstimmung des zeitlichen Reißmomentes bei einem Bündel von Reißbändern durch deren Führung und damit in der Länge derart vorgesehen ist, dass sie nacheinander die Löcher reißen, um damit die Lastspitze des Airbags niedrig zu halten, und/oder dass eine Ausführung der Schnittstellen von Last tragenden Verbindungen von Kettund Schussfaden derart ausgeführt ist, dass die "Kreuzungen" als jeweils überschießende Materiallänge in Kett- und Schussrichtung zu erstellen, um Ausreißen zu verhindern.

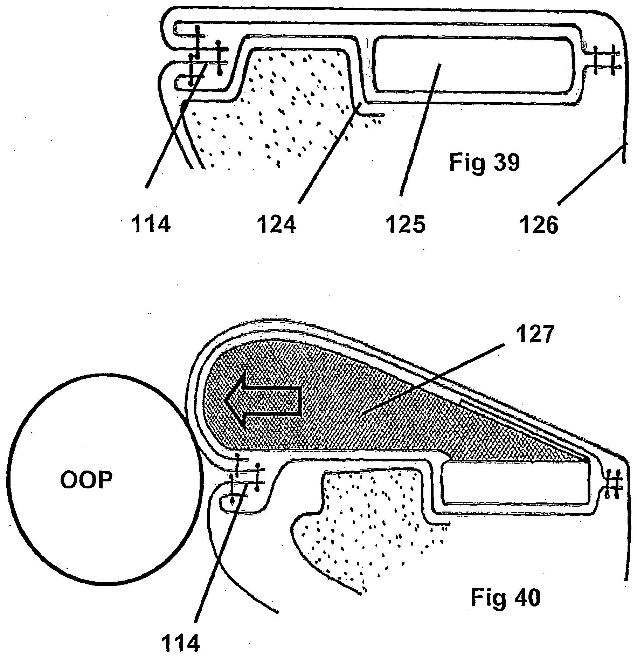

Bei einem noch weiteren erfindungsgemäßen Airbagmodul, insbesondere gemäß den vorher genannten Ausgestaltungen, ist vorgesehen, dass eine Vernähung der Relßbänder In der Manschette derart gestaltet ist, dass ein Teil der Energie des Airbags auf die Reißbänder entfällt und ein weiterer Teil auf die Aufreißnaht direkt entfallt (Fig. 39 bis 41).

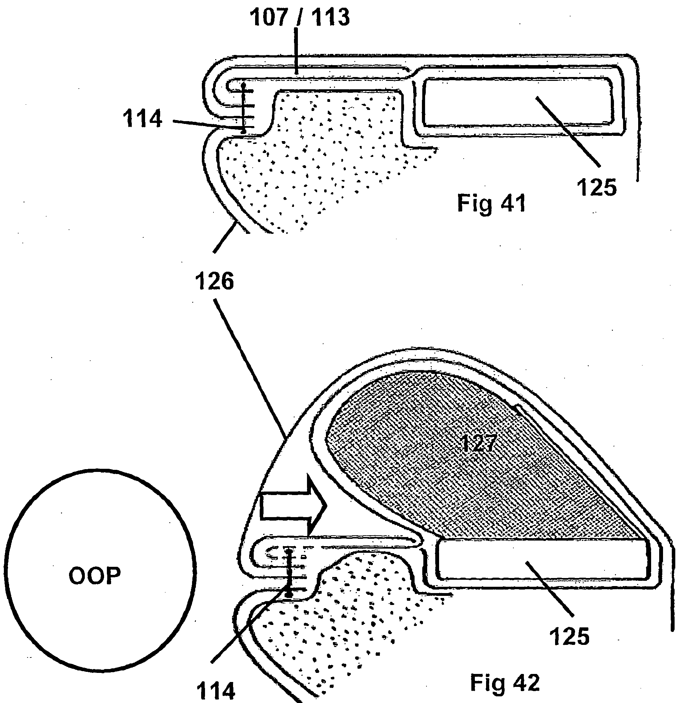

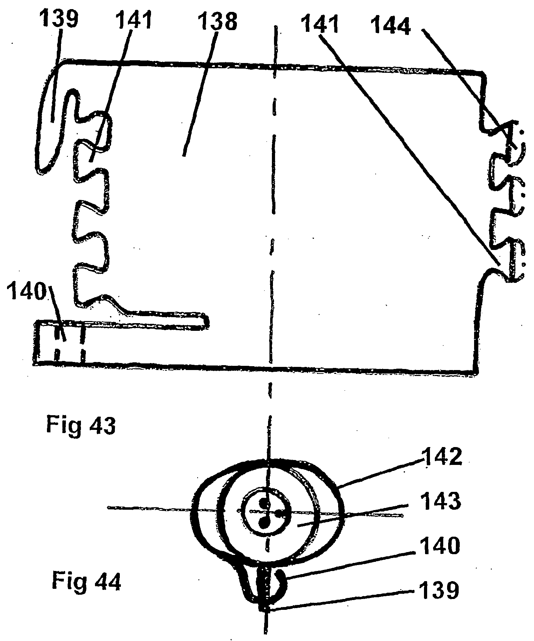

Ein noch weiteres erfindungsgemäßes Airbagmodul, insbesondere gemäß den vorher genannten Ausgestaltungen, ist derart, dass ein Durchstecken der Reißbänder vor dem Zusammenbau der Reißbandmanschette derart erfolgt, dass die volle Kraft des sich entfaltenden Airbags frühzeitig von den Reißbändern aufgenommen wird (Fig. 42 und 43), wobei vorzugsweise günstigere OOP- Werte (out of position) (ein Kind liegt im Extremfall mit dem Kopf direkt vor dem sich entfaltenden Airbag) dadurch realisiert sind, dass frühzeitig die Aufreißnaht in Gegenrichtung des sich entfaltenden Airbags geöffnet wird.

Bei noch einem anderen erfindungsgemäßen Airbagmodul, insbesondere gemäß den vorher genannten Ausgestaltungen, ist vorgesehen, dass eine Anbindung des Airbagmoduls derart gestaltet ist, dass es zur Befestigung eingesteckt und verclipst wird und damit der Schraubpro-zess gespart wird (Fig. 43 bis 47). Eine bevorzugte Weiterbildung davon besteht darin, dass eine Ausbildung eines Hakens in einer Blechplatine vorgesehen ist, die verwendet wird, um daraus ein Rohr zu formen, dass wiederum dazu verwendet wird, um das Textil des Airbags vor heißen Gasen zu schützen, wobei weiter bevorzugt eine Ausbildung eines Clipses aus vorgenannter Blechplatine vorgesehen ist, und wobei ferner insbesondere eine Verwendung des Hakens und des Clipses zur Befestigung und Lagesicherung des Airbagmoduls an der Struktur der Lehne vorgesehen ist.

Weitere bevorzugte und/oder vorteilhafte Ausgestaltungen der Erfindung ergeben sich aus den abhängigen Ansprüchen und deren Kombinationen sowie den gesamten vorliegenden Anmeldungsunterlagen und insbesondere den Erläuterungen und Darstellungen von Ausführungsbeispielen in der Beschreibung und der Zeichnung.

Zusammenfassend schafft die Erfindung insbesondere Öffnungshilfen einer Airbagnaht unter einer Abdeckung, vorzugsweise beim Sitzairbag, die die Robustheit erhöhen. D.h. es wird keine heute übliche geschwächte Airbagaufreißnaht mehr benötigt. Die Naht öffnet früher und in der Gegenrichtung der Airbagentfaltung, weiter weg vom OOP- ("out of position") Kopf eines Kindes. Der Airbag ist damit weniger aggressiv. Die Robustheit minimiert den Entwicklungsaufwand und die heutige aufwendige Überwachung und das Risiko von Rückrufen. Da die "vorgeöffhete" Airbagaufreißnaht den Bag weniger behindert, ist die Entfaltung des Bags besser, mit weniger Toleranz behaftet und auch weniger unterschiedlich bei niedriger und hoher Temperatur. Nicht geschwächte Nähte lösen auch das Problem der Haltbarkelt bei normalem Gebrauch und schon bei der Montage. Weiter unterstützt diese Technik zukünftige "große" Bags für mehr Sicherheit und weniger Aggressivität für schärfere OOP-Bedingungen.

Als weitere vorteilhafte und auch eigenständige erfinderische Ausgestaltung können Module flacher gestaltet worden und werden von der Außenseite des Sitzes nur noch verhakt und ver-clipst.

Zusammengefasst schafft die Erfindung einen Mellensteln für besseres Airbagverhalten zu deutlich niedrigeren Kosten und Risiken.

Die Erfindung wird anhand von Ausfuhrungsbeispielen nachfolgend unter Bezugnahme auf die Zeichnung lediglich exemplarisch näher erläutert, in der
Fig. 1 schematisch teilweise einen mit einem Airbagmodul ausgestatteten Sitz gemäß einem ersten Ausfuhrungsbeispiel in einer geschnittenen Ansicht zeigt,
Fig. 2 das erste Ausfuhrungsbeispiel eines Airbagmoduls in einem Sitz gemäß der Fig. 1 in einem schematischen Querschnitt durch den Sitz zeigt,
Fig. 3 die Schnittdarstellung der Fig. 2 bei einem Crash in einer schematischen Darstellung zeigt,
Fig. 4 ausgehend von den Darstellungen in der Fig. 3 den weiteren Austritt des Airbags in einer schematischen Darstellung zeigt,
Fig. 5 im Rahmen eines weiteren Ausführungsbeispiels eine Vorrichtung zur Herstellung einer Tasche für das Airbagmodul in einer schematischen Darstellung zeigt,
Fig. 6 eine Gewebebahn im Zuschnitt mit den angeformten Reißbändern in einer schematischen Darstellung zeigt, Fig. 7 eine Gewebebahn eines dritten Ausfuhrungsbeispiels im Zuschnitt mit angeformten Reißbändern in einer schematischen Draufsichtsdarstellung zeigt,
Fig. 8 die Gewebebahn des dritten Ausführungsbeispiels aus der Fig. 7 in einem schematischen Querschnitt zeigt,
Fig. 9 eine Gewebebahn eines vierten Ausführungsbeispiels im Zuschnitt mit angeformten Reißbändern in einer schematischen Draufsichtsdarstellung zeigt,
Fig. 10 eine Gewebebahn eines fünften Ausführungsbeispiels in einer schematischen Draufsichtsdarstellung zeigt,
Fig. 11 eine Gewebebahn eines sechsten Ausführungsbeispiels In einer schematischen Draufsichtsdarstellung zeigt,
Fig. 12 eine Gewebebahn eines siebten Ausführungsbeispiels in einer schematischen Draufsichtsdarstellung zeigt,
Fig. 13 die Gewebebahn des siebten Ausführungsbeispiels aus der Fig. 12 in einem weiteren Fertigungsstadium in einer schematischen Draufsichtsdarstellung zeigt,

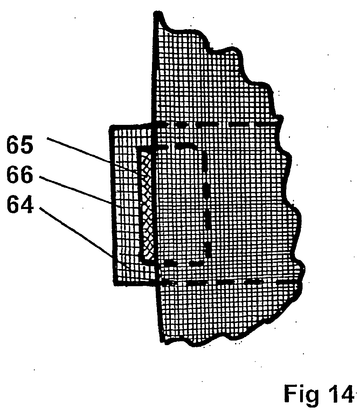

Fig. 14 ein Detail bei der Herstellung des siebten Ausführungsbeispiels aus den Fig. 12 und 13 in einer schematischen Draufsichtsdarstellung zeigt,
Fig. 15 eine Gewebebahn eines achten Ausführungsbeispiels in einer schematischen Draufsichtsdarstellung zeigt,
Fig. 16 eine schematische Seitenansicht zur Verdeutlichung eines Details des achten Ausführungsbeispiels gemäß der Fig. 15 zeigt,
Fig. 17 eine Gewebebahn eines neunten Ausführungsbeispiels in einer schematischen Draufsichtsdarstellung zeigt,
Fig. 18 die Gewebebahn des neunten Ausführungsbeispiels aus der Fig. 17 in einem weiteren Fertigungsstadium in einer schematischen Draufsichtsdarstellung zeigt, Fig. 19 eine schematische Seitenansicht zur Verdeutlichung eines Details des neunten Ausfuhrungsbeispiels gemäß den Fig. 17 und 18 in einem weiteren Fertigungsstadium zeigt,
Fig. 20 eine schematische Seitenansicht zur Verdeutlichung eines Details des neunten Ausfuhrungsbeispiels gemäß den Fig. 17 und 18 in noch einem weiteren Fertigungsstadium zeigt,
Fig. 21 eine schematische Seitenansicht zur Verdeutlichung eines Details des neunten Ausfuhrungsbeispiels gemäß den Fig. 17 und 18 In einem noch weiteren Fertigungsstadium zeigt,
Fig. 22 die Gewebebahn des neunten Ausführungsbeispiels aus den Fig. 17 und 18 In noch einem weiteren Fertigungsstadium in einer schematischen Draufsichtsdarstellung zeigt,
Fig. 23 eine schematische Seitenansicht zur Verdeutlichung eines Details des neunten Ausführungsbeispiels gemäß dem Fertigungsstadium entsprechend der Fig. 22 zeigt,
Fig. 24 die Gewebebahn des neunten Ausfuhrungsbeispiels aus den Fig. 17 und 18 in einem anderen Fertigungsstadium in einer schematischen Draufsichtsdarstellung zeigt,
Fig. 25 eine schematische Seitenansicht zur Verdeutlichung eines Details des neunten Ausführungsbeispiels gemäß dem Fertigungsstadium entsprechend der Fig. 24 zeigt,
Fig. 26 eine schematische Seitenansicht zur Verdeutlichung eines zehnten Ausführungsbeispiels zeigt,
Fig. 27 eine schematische ausschnittsweise Übersichtsdarstellung zur Verdeutlichung des zehnten Ausführungsbeispiels gemäß der Fig. 26 zeigt,
Fig. 28 eine schematische Draufsichtsdarstellung eines Fertigungsstadiums eines weiteren elften Ausführungsbeispiels zeigt,
Fig. 29 eine schematische Draufsichtsdarstellung eines anderen Fertigungsstadiums des elften Ausführungsbeispiels gemäß der Fig. 28 zeigt, Fig. 30 eine schematische Draufsichtsdarstellung noch eines anderen Fertigungsstadiums des elften Ausführungsbeispiels gemäß den Fig. 28 und 29 zeigt,
Fig. 31 eine schematische Seitenansichtsdarstellung eines weiteren Fertigungsstadiums des elften Ausführungsbeispiels gemäß den Fig. 28 bis 30 zeigt,
Fig. 32 eine schematische Detailansicht eines noch weiteren Fertigungsstadiums des elften Ausführungsbeispiels gemäß den Fig. 28 bis 31 zeigt,
Fig. 33 eine schematische Draufsichtsdarstellung noch eines anderen Fertigungsstadiums des elften Ausführungsbeispiels gemäß den Fig. 28 bis 32 zeigt,
Fig. 34 eine schematische Detailansicht noch eines weiteren Fertigungsstadiums des elften Ausführungsbeispiels gemäß den Fig. 28 bis 33 zeigt,
Fig. 35 eine schematische Draufsichtsdarstellung eines anderen Fertigungsstadiums des elften Ausführungsbeispiels gemäß den Fig. 28 bis 34 zeigt,
Fig. 36 eine schematische Seitenansichtsdarstellung eines noch weiteren Fertigungsstadiums des elften Ausführungsbeispiels gemäß den Fig. 28 bis 35 zeigt,
Fig. 37 eine schematische Seitenansichtsdarstellung eines zwölften Ausführungsbeispiels zeigt,
Fig. 38 eine schematische Seitenansichtsdarstellung eines dreizehnten Ausführungsbeispiels zeigt,
Fig. 39 in einer schematischen Seitenansicht einen Anfangszustand bei der Funktion eines Ausführungsbeispiels des Airbagmoduls verdeutlicht,
Fig. 40 in einer schematischen Seitenansicht einen Auslösezustand bei der Funktion des Ausführungsbeispiels des Airbagmoduls ausgehend von der Fig. 39 verdeutlicht,
Fig. 41 in einer schematischen Seitenansicht einen Anfangszustand bei der Funktion eines weiteren Ausführungsbeispiels des Airbagmoduls verdeutlicht, Fig. 42 in einer schematischen Seitenansicht einen Auslösezustand bei der Funktion des weiteren Ausführungsbeispiels des Airbagmoduls ausgehend von der Fig. 41 verdeutlicht,
Fig. 43 in einer schematischen Draufsicht ein Detail einer Fertigungsvariante für ein Air-bagmodul zeigt,
Fig. 44 in einer schematischen Schnittansicht ein weiteres Detail der Fertigungsvariante für ein Airbagmodul gemäß der Fig. 43 zeigt,
Fig. 45 in einer schematischen Draufsicht ein Detail einer anderen Fertigungsvariante für ein Airbagmodul zeigt,
Fig. 46 in einer schematischen Seitenansicht das Detail der anderen Fertigungsvariante für ein Airbagmodul gemäß der Fig. 45 zeigt, und
Fig. 47 in einer schematischen Schnittansicht ein weiteres Detail der Fertigungsvariante für ein Airbagmodul gemäß den Fig. 45 und 46 zeigt.

Anhand der nachfolgend beschriebenen und in den Zeichnungen dargestellten Ausfuhrungsund Anwendungsbeispiele wird die Erfindung lediglich exemplarisch näher erläutert, d.h. sie ist nicht auf diese Ausführungs- und Anwendungsbeispiele oder auf die jeweiligen Merkmalskombinationen innerhalb einzelner Ausführungund Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit konkreten Ausfuhrungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, und insbesondere Merkmalen und Ausgestaltungen anderer Ausfuhrungsbeispiele kombiniert werden.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die In der vorliegenden Beschreibung enthalten, aber nicht in der Zeichnung sichtbar oder dargestellt sind, ohne weiteres für einen Fachmann verständlich.

Vorrichtungs- und Verfahrensmerkmale ergeben sich auch jeweils aus bildlichen und schriftlichen Darstellungen von Verfahren bzw. Vorrichtungen.

Ferner ist die Bezugszeichenliste am Ende dieser Beschreibung explizit Bestandteil dieser Beschreibung und sind die vorher im Rahmen von einzelnen Ausgestaltungen angegebenen Verweise auf Figuren der Zeichnung hiermit explizit auch Bestandteil der nachfolgenden detaillierten Beschreibung der in den Figuren der Zeichnung gezeigten Ausführungsbeispiele, um bloße Wiederholungen der entsprechenden Angaben nachfolgend zu den einzelnen Figuren zu vermeiden.

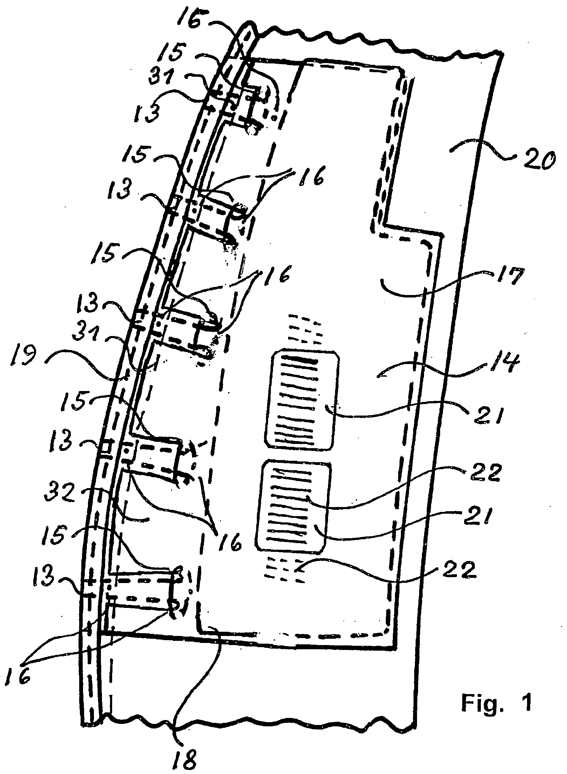

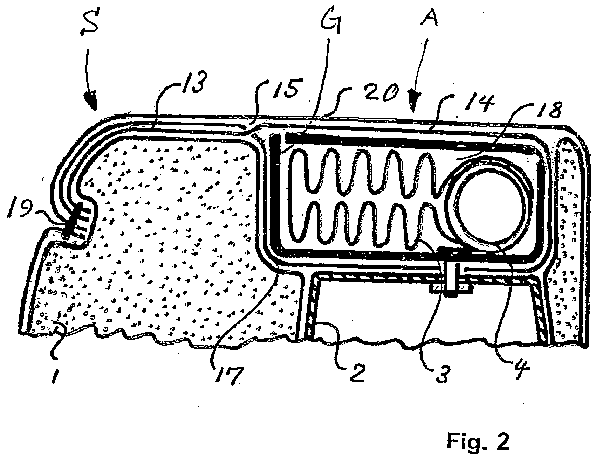

In den Fig. 1 und 2 ist, um einen Überblick über einen Sitz S und ein Airbagmodul A zu geben, wie sie allgemein im Sinn der vorliegenden Erfindung angeordnet sind, eben ein solches Airbagmodul A umgeben vom Sitzschaum 1 einer Sitzlehne 2 eines Sitzes S, wie beispielsweise eines Fahrzeugsitzes (jeweils nur ausschnittsweise gezeigt), gezeigt (siehe insbesondere Fig. 2). Das Airbagmodul A enthält einen gefaltet Innerhalb eines Gehäuses G des Airbagmo-duls A untergebrachten Airbag 3 und einen Gasgenerator 4, der im Auslösefall des Airbagmo-duls A das Gas zum Aufblasen des Airbags 3 zur Verfügung stellt (siehe insbesondere Fig. T). Diese Ausgestaltung ist zwar nur ein Beispiel, gibt aber für alle weiter in den vorliegenden Unterlagen behandelten Ausführungsbeispiele eine grundsätzliche Gesamtgestaltung an, mit der im weiteren nur mehr behandelte Detailausgestaltungen zu kombinieren sind.

Der gegenüber den eingangs angegebenen früheren Techniken neue Erfindungsaspekt besteht prinzipiell in der Anwendung mehrerer Reißbänder 13 parallel (nicht zwingend geometrisch zu verstehen, sondern im wesentlichen parallel nebeneinander funktionierend) nebeneinander gemäß dem Ausfuhrungsbeispiel, das in der Fig. 1 verdeutlicht ist. Um dies kostengünstig zu erreichen, werden die Reißbänder 13 aus einer Gewebebahn 14 ausgeschnitten, gelasert oder dergleichen. Damit der Reißeffekt entsteht, werden die Reißbänder 13 durch Löcher 15 im unteren Teil der Gewebebahn 14 gesteckt. Die Gewebeteile 32 zwischen den Reißbänder bleiben dabei als Schutzschild zwischen dem Airbag 3 und einem evtl. auf dem Airbag 3 liegenden Sitzschaum 1 oben aufliegen. Die Reißbänder 13 werden gemäß der Fig. 1 auf dem unteren Teil der Gewebebahn 14 mit einer zerreißenden schwachen, beim Crash zerreißenden Montagenaht (nicht gezeigt) lagefixiert oder mit "Schweißpunkten" 16 fixiert. Dieser Zusammenbau der Gewebebahn 14 bildet eine Tasche 17 zur Aufnahme des Airbagmoduls 18. Das vordere Ende des Zusammenbaus der Gewebebahn 14 wird mit einer Airbagnaht 19 eines Sitzbezuges 20 vernäht. Die Tasche 17 hat Öffnungen 21, um dadurch einen Barcode 22 des Airbagmoduls 18 zu scannen oder scannen zu können. Um die zertifizierte Montage und richtige Position des Airbagmoduls 18 in der Tasche 17 zu gewährleisten, sind vorzugsweise von der Gewebebahn neben den Löchern 15 abgedeckt, weitere Barcodes 22 angebracht, die insbesondere nicht sichtbar sein dürfen.

Die Fig. 2 zeigt die Darstellung in der Fig. 1 im Querschnitt durch den Sitz S. Das Airbagmo-dul A bzw. 18 wird von der Gewebebahn 14 umschlossen, aus der die Tasche 17 gebildet wurde. Reißbänder 13 und die darüber liegende Gewebebahn 14 werden als Zusammenbau mit dem Sitzbezug 20 mittels der Airbagnaht 19 vernäht.

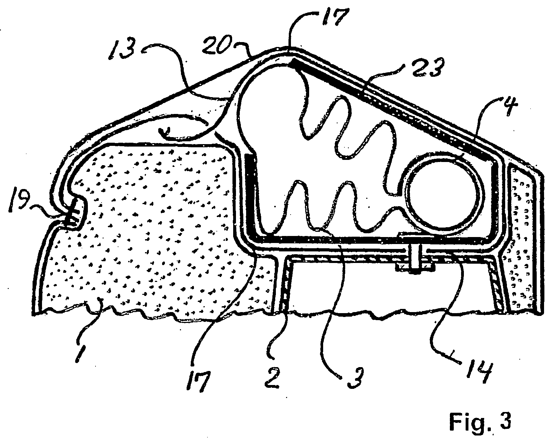

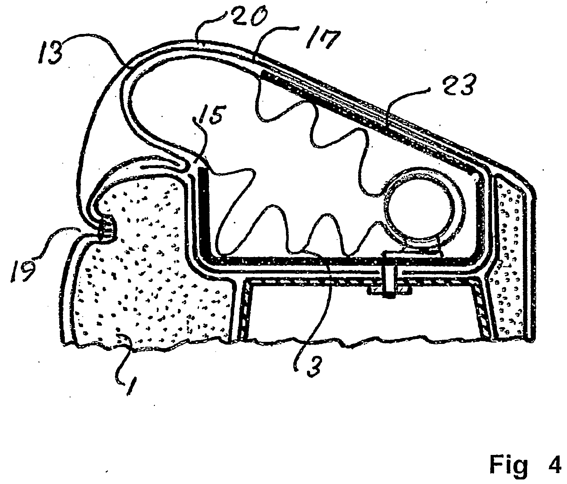

Die Fig. 3 zeigt die Schnittdarstellung der Fig. 2 beim Crash. Der Airbag 3 hebt einen Deckel 23 des Airbagmoduls A bzw. 18 an und reißt damit alle aus der Gewebebahn 14 gefertigten Reißbänder 13 aus der Airbagnaht 19 heraus. Hierdurch entstehen in der Airbagnaht 19 Löcher, die die Airbagnaht 19 stark schwächen. Der Airbag 3 trifft einen Moment später auf die zerrissene und damit stark geschwächte Airbagnaht 19. Das ist vorteilhaft für den Airbag-durchtritt und die Airbagnaht 19. Letztere Ist damit selbst robust, d.h. kann nicht oder weniger geschwächt ausgeführt werden. Toleranzen der Airbagnaht 19 haben keinen merklichen Ein-fluss mehr auf die Airbagentfaltung. Die Fig. 4 zeigt ausgehend von den Darstellungen in der Fig. 3 den weiteren Austritt des Airbags 3 und damit unter Umständen entsprechend der Ausgestaltung eine Bewegungsübertragung des Airbags 3 auf die Bewegung der Reißbänder 13 in doppelter Geschwindigkeit nach dem Gesetz des Flaschenzugs, wie den Darstellungen entnommen werden kann.

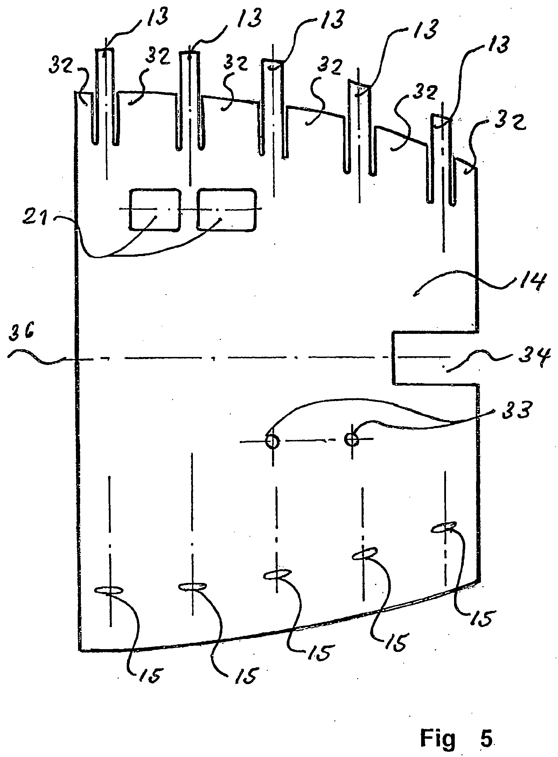

Zum besseren Verständnis ist in der Fig. 5 die Gewebebahn 14 im Zuschnitt mit den angeformten Reißbändern 13 und den dazwischen liegenden Gewebeteilen 32 gezeigt, die evil. ein Segment vom Sitzschaum 1, der auf dem Airbagmodul A respektive 18 liegt, vor der Berührung mit dem Airbag 3 schützen und damit Schaumbrockenflug verhindern. Gleiches bewirkt eine durchgehende Schaumabdeckung 35 auf der Gegenseite des Gewebeteiles 32. Im letzteren Fall wird man mit dem Gewebeteil 32 vorzugsweise den Silzschaum 1 abdecken, der vor dem Airbagmodul A oder 18 liegt. Aufweiche Seite man die Gewebeteile 32 und die durchgehende Schaumabdeckung 35 legt, hängt von den individuellen Gegebenheiten des Sitzschaumes 1 ab, den man abdecken muss. Mit einer Bügelfalte 36 werden die Hälften des Gewebeteiles zueinander positioniert. Ein Ausschnitt 34 wird so vernäht, dass ein einfacher Zugang zu einem Stecker (nicht gezeigt) des Airbags 3 gewährleistet ist (nicht gezeigt). Die Öffnungen 21 gestatten den Zugang des Barcodes 22 des Airbagmoduls 18 bzw. decken den Teil des Barcodes ab, der beweist, dass die Tasche 17, die aus der Gewebebahn 14 gebildet ist, das Airbagmodul auch beinhaltet. Das ist als zusätzlicher Effekt sozusagen eine kostenlose Zertifizierung der Montage.

Zusammenfassend haben die Ausgestaltungen gemäß den Fig. 1 bis 5 folgende Merkmale und

### Vorteile:

Diese Alternative der Reißbandtechnik führt mehrere Reißbänder zusammen zu einer Aktionseinheit für mehrere simultan gerissene Löcher In der Airbagnaht. Das führt zu starker Robustheit des Airbagaustritts.

Der Airbag reißt bereits bei der Deckelöffnung des Moduls mehrere Löcher in die Air- bagdurchtrittsnaht.

Die Gewebeauflage, die die Reißbänder trägt, dient dem Schutz vor Schaumbrockenflug und auch die Reißbänder schützen den Schaum vor dem Airbag.

Die Gewebeteile, die zwischen den heraus geschnittenen oder heraus gelaserten Reißbändern entstehen, schützen einen evtl. auf dem Airbag liegenden Sitzschaum vor kräftiger Berührung mit dem Airbag und damit vor Schaumbrockenflug.

Vorteile anhand eines Beispiels: Angenommen, die zu öffnende Airbagnaht hat 350 Millimeter Länge. Das ergibt bei einer Stichlänge von 5 Millimetern 70 durch den Airbag zu öffnende Stiche. Letztere werden heute, also gemäß dem aus der Praxis bekannten Stand der Technik, mit einem geschwächten Faden mit einer Reißfestigkeit von ca. 20 N genäht. Dieser geschwächte Faden ist sehr problembehaf?tet, da er große Toleranzen hat, und damit an der unteren Toleranzgrenze beim Gebrauch leicht reißt und an der oberen Toleranzgrenze die Entfaltung des Airbags negativ beeinfiusst. Deshalb muss die Naht durch Schussversuche während der Produktionszeit aufwendig überwacht Werden. Der Airbag muss bei der vorliegend angedachten Version jedenfalls also 70 Stiche X 20 N = 1400 N Kraft aufbringen, um die Naht zu öffnen. Gemäß der vorliegenden Erfindung reißen z.B. 5 Stück zur Airbagnaht beigenähte Bänder mit einer Breite von je 8 Millimeter 1 bis 2 Stiche an entsprechend 5 Stellen durch. Da der Airbag also nur maximal 10 aufeinander folgende Stiche durchreißen muss, brauchen diese nicht geschwächt zu werden und können eine beliebige große Toleranz haben. Üblicherweise hat ein nicht geschwächter Faden 40 N Festigkeit. Der Airbag muss also nur 10 X 40 N = 400 N durchreißen - weniger als ein Drittel zum heutigen Stand der Technik. Dies hilft der "Performance" des Airbags und der Robustheit der Naht, d.h. die Naht öffnet immer sehr schnell, gleichmäßig auch bei größter Toleranz in der Festigkeit. Eine Überwachung ist dann nicht mehr notwendig. Die Haltbarkeit im normalen Gebrauch ist auch kein Thema mehr.

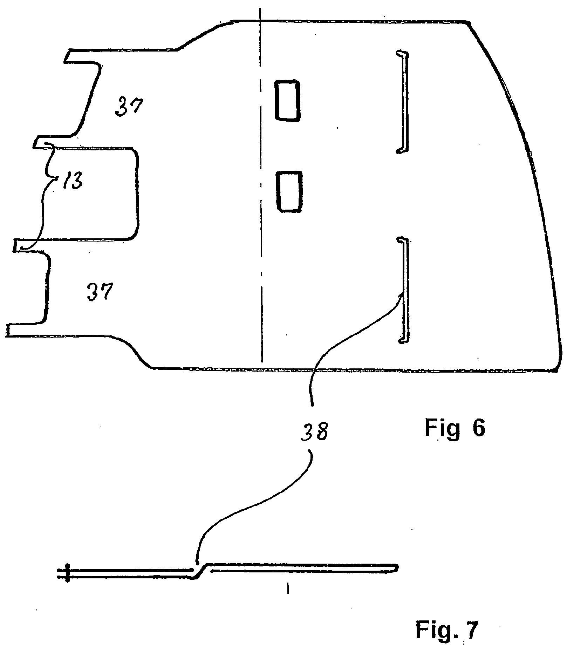

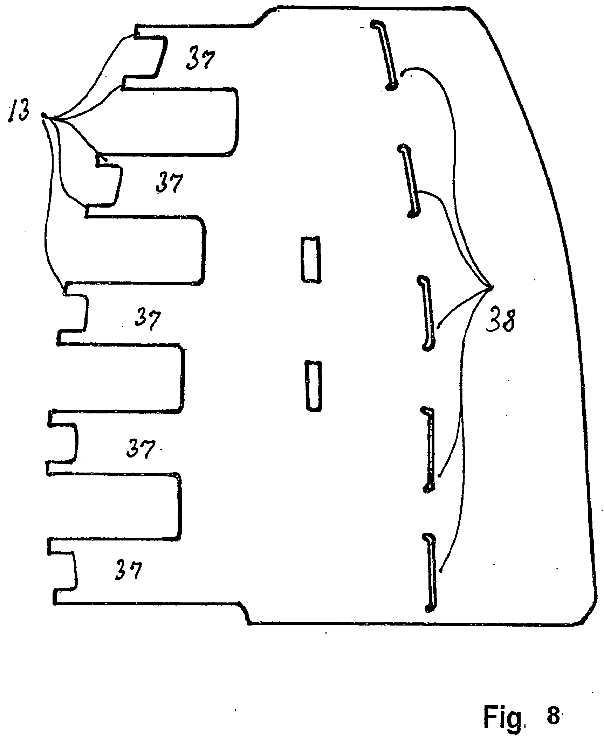

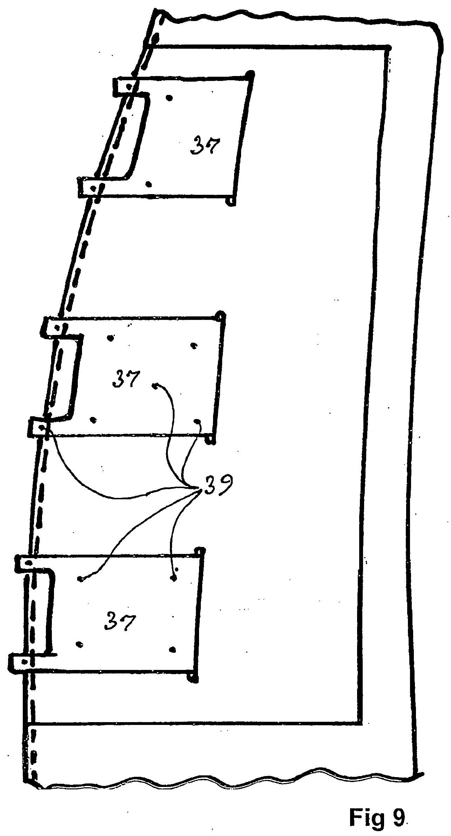

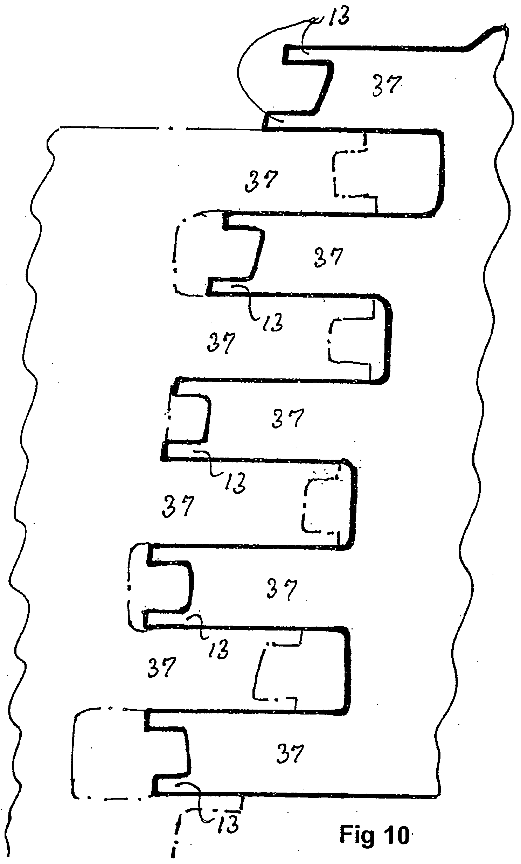

Die Fig. 6 zeigt eine weitere alternative Ausführungsform. Zur besseren, stabileren Handhabung der Reißbänder 13 sind jeweils zwei zusammengefasst. Der Airbag 3 drückt besser gegen ein somit entstehendes breiteres Band 37. Diese breiten Bänder 37 werden, wie zuvor erwähnt, besser durch die größeren angepassten Schlitze 38 gesaugt oder gesteckt, wie der Fig. Fig. 7 zu entnehmen ist. Diese Variante, bei der das Airbagmodul eine derart gestaltete Gewebebahn enthält, dass mehrere, vorzugsweise wenigstens zwei Reißbänder zu einem breiten Band zusammengefasst sind, hat klare Vorteile bei der Handhabung und der Airbaganlage. Die Fig. 8 zeigt eine weitere alternative Ausuhrungsform Hier sind fünf breite Bänder 37 mit zehn Reißbändern 13 gezeigt. Die Anzahl der Reißbänder 13 wird ohne weiteres durch Versuche optimiert. Mehr Reißbänder 13 ergeben einerseits mehr gerissene Löcher in der Airbag-naht 19 und damit den Beginn von mehreren leicht weiter reißenden Laufmaschensegmenten. Andererseits bedeuten mehr Reißbänder 13 eine höhere Zugkraft für den sich entfaltenden Airbag 3. Bevorzugt sind beispielsweise acht Reißbänder 13 an vier breiten Bändern 37 mit einer Breite von z.B. 6 mm bei einer Stichlänge von etwa 4 mm bis 5 mm. Die Fig. 9 zeigt eine Alternative mit drei durchgesteckten breiten Bändern 37, fixiert in ihrer Lage mit Heißstiften 39 oder Laserpunkten. Die Fig. 10 zeigt ein Beispiel einer optimierten Schachtelung der Gewebebahn 14. Hierzu haben die breiten Bänder 37 gleiche Breite. Somit kann das Airgbag-modul eine solche Gewebebahn enthalten, so dass mehrere, bevorzugt wenigstens zwei Reißbänder zu einem breiten Band zusammengefasst sind. Alternativ oder zusätzlich kann eine Gewebebahn enthalten und derart gestaltet sein, so dass sie breite Bänder enthält, die zusammen mit ihren Zwischenräumen eine Verschachtelung weiterer Gewebebahnen ermöglichen.

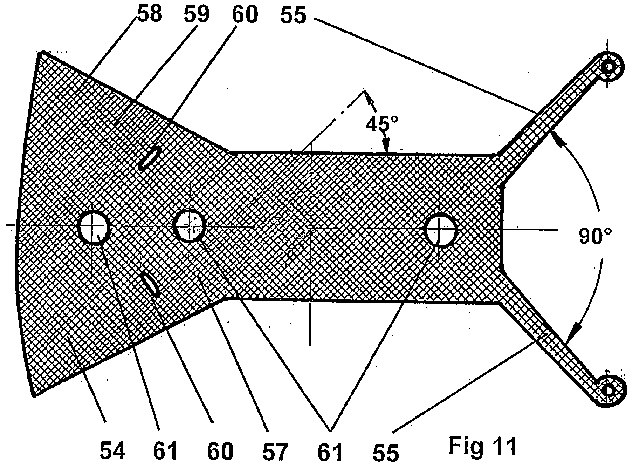

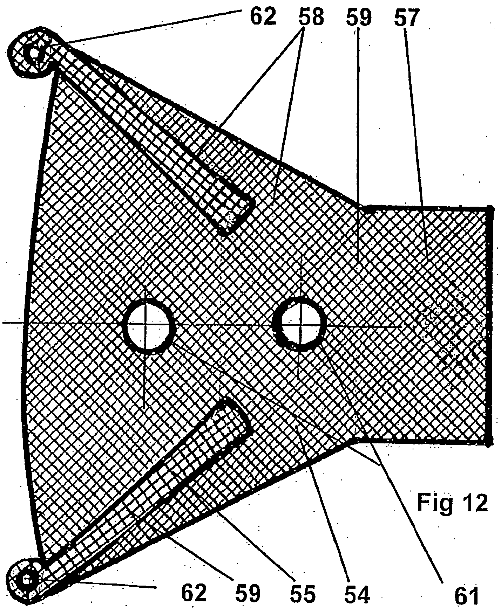

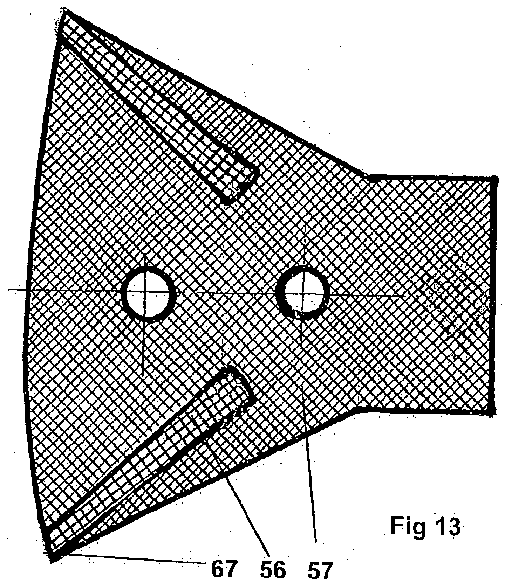

Eine weitere Alternative ist eine in der Fig. 11 gezeigte Airbagmanschette 54, bei der Reißbänder 55 unter 90 Grad gespreizt sind, um kostengünstig einen großen Aufreißbereich der Naht (nicht gezeigt) abzudecken. Hierzu wird eine Reißbandmanschette 56 aus einem Textil 57 derart ausgeschnitten, dass ein Reißband 55 durchgehende Kettfäden 58 hat und das andere Reißband 55 durchgehend die Schussfaden 59 hat. Damit wird deren ausreichende Festigkeit und "Kammscherfestigkeit" erreicht. Die Fig. 12 zeigt die weitere Herstellung der Reißbandmanschette 56. Hierzu wird sie, wie gezeigt ist, zusammengeklappt und werden beide Reißbänder 55 durch Löcher 60 gesteckt. Zur richtigen Positionierung dienen drei Löcher 61. An den Enden der Reißbänder 55 sind ebenfalls zwei Löcher 62 angebracht, die ebenfalls zur Positionierung in Stifte (nicht gezeigt) eingehängt werden. Die Fig. 13 zeigt, dass die Reißbandmanschette 56 dann am Ende der Reißbänder 55 mit einem Heißmesser (nicht gezeigt) beschnitten wurde. Hierdurch "verschweißen" bei 67 die Reißbänder 56 mit dem Textil 57 der übrigen Reißbandmanschette 56 derart, dass dieses Teil den Transport und die Handhabung als fixierter Zusammenbau 62 übersteht. Dieser Zusammenbau 62 wird dann wie bei den anderen Reißbandmanschetten- Alternativen zur Airbagnaht (nicht gezeigt) beigenäht. In der Fig.

14 ist gezeigt, wie diese Heißmesserschneid- und Schweißtechnik bei anderen gezeigten Reißbandmanschetten 40 usw. funktioniert. Auch hier werden breite Bänder 37 durch Schlitze 38 (vergleiche z.B. Fig. 8) simultan mit einem Spezialkamm wie mit Fingern einer Hand (in dem Fall aus Blech o.a.) durchgesteckt. Die schmalen Reißbänder 63 sind derart miteinander verbunden, dass sich Schlaufen 64 ergeben. Diese Schlaufen 64 werden dann in Formblechen 65 zur Positionierung eingehängt. Auch hier schneidet ein Heißmesser Querverbindung 66 weg und verschweißt die schmalen Reißbänder 63 mit dem Textil 57 der Reißbandmanschette 56. Das Weitere wurde zuvor dargestellt.

Noch eine weitere Alternative ist in den Fig. 15 und 16 gezeigt. Hier Ist ein Reißband 68 am Ende als Airbaglabel 69 ausgeführt. Dazu wird das Reißband 68 durch eine Airbagaustritts-naht 70 gesteckt und mit dieser vernäht. Der übrige Teil der Reißbandmanschette wird, wie in den Fig. 16 gezeigt ist, immer vernäht. Eine gezeigte Reißbandmanschette 71 kann alternativ nach oben und/oder unten zweckentsprechend mit weiteren Reißbändern (nicht gezeigt) erweitert werden.

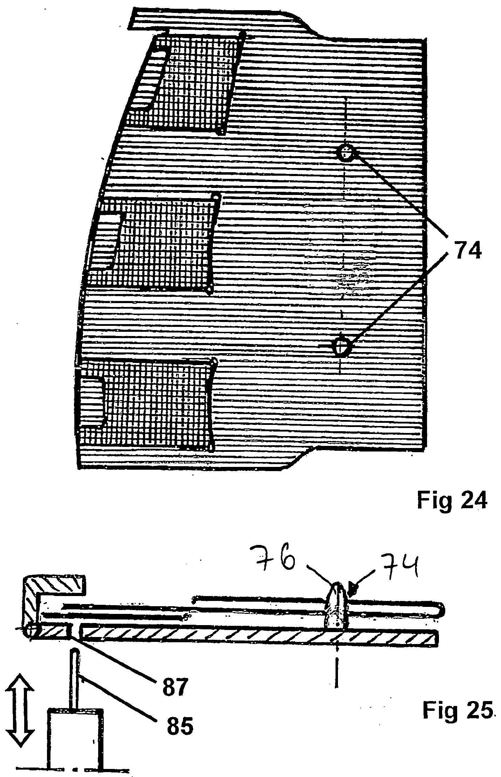

Eine andere Alternative einer effektiven Herstellung der Reißbandmanschette 56 ist in den Figuren 17 bis 25 dargestellt. Die Fig. 17 zeigt einen ausgeschnittenen bzw. den gelaserten Zuschnitt 72. Oben links, am Beginn der Nähoperation ist ein Marker (nicht bezeichnet) integriert, um den Nähbeginn bei lichtschrankengesteuerten Nähmaschinen festzulegen. Weitere Neuerungen gegenüber dem bisher Gezeigten sind vier Positionierungslöcher 74 und ein Schauloch 75 für die Ablesbarkeit des Barcodes 22 auf dem Airbagmodul A oder 18 und der früher beschriebenen Zertifizierung der korrekten Montage. Die Befestigungslöcher 92 und 89 werden genutzt, wenn die Reißmanschette 71 z.B. am linken Sitz montiert wird. Dabei dient ein Befestigungsloch 91 als Schauloch 75 für den Modul-Barcode (nicht gezeigt). Wird die Reißbandmanschette 71 am rechten Sitz montiert, werden dazu Befestigungslöcher 90 und 91 verwendet. Das Befestigungsloch 92 ist dann das Schauloch 75. Reißbänder 83 bzw. 84 liegen einmal auf und einmal unter dem Zuschnitt 72, was aber auf die Funktion keinen Einfluss hat. Die Fig. 22 zeigt den zusammengeklappten Zuschnitt 72 derart, dass dessen vier Positionslöcher 74 in zwei Bolzen 76 auf eine Platte 77 gesteckt werden. Die Fig. 23 zeigt dies im Schnitt. Ebenfalls in die Bolzen 76 gelegt wird eine Schieberplatte 78, deren Schlitze 79 eine geführte Bewegung zulassen (Fig. 18). Die Fig. 19 zeigt dies im Schnitt. In der Fig. 20 ist gezeigt, dass zusammengeklappte Textilenden 80 auf die Schieberplatte 78 geschwenkt werden. Dabei wird das durchgehende Textilende 80 mit Schlitzen 81 mit Fingern 82 eines Menschen oder eines Roboters in der gezeigten Position gehalten. Danach wird die Schieberplatte 78 nach "links" geschoben und nimmt damit die breiten Reißbänder 83 mit, die dann in der Position vorbestimmt auf die Platte 77 fallen (Fig. 21). Die schmalen Reißbänder 84 sind dabei so quer miteinander verbunden, dass sie eine stabile Position haben. Die Fig. 24 zeigt die durch die Schlitze 79 gesteckten breiten Reißbänder 83, deren anschließende schmalen Reißbänder 84 mit dem Zuschnitt 72 darauf positioniert mit einem Heißmesser 85 abgetrennt werden. Hierdurch wird erreicht, dass die schmalen Reißbänder mit dem Zuschnitt 72 zusammenbacken. Damit ist die Reißbandmanschette 56 ein robustes Teil, das in diesem Zustand der Airbagnaht 19 beigenäht wird. Weiter verschmilzt dieser Heißschneideprozess die Randfäden derart, dass sie sich beim Reißen beim Crash nicht herausschälen (auch Kammscherfestigkeit genannt). Dazu wird, wie in der Fig. 25 gezeigt ist, vorzugsweise ein Heißmesser 85 durch einen Schlitz 87 in der Platte 77 geschoben (z.B. mit einem Luftzylinder). Gegenüber befindet sich dann ein statisches, beigeschobenes oder beigeklapptes Gegenlager 88.

Eine weitere mögliche Optimierung der Erfindung ist in den Fig. 26 und 27 gezeigt. Hintergrund der Erfindung, wie sie in den bisher behandelten Ausführungsbeispielen zum Tragen kommt, ist, dass üblicherweise als eine Alternative "Hardcover" - Module eingesetzt werden, d.h. der Airbag In einem Gehäuse untergebracht ist, das mit dem Schaum des Sitzes flächig abschließt. Die nun nachfolgend behandelte weitere Alternative ist die Verwendung eines Air-bags mit "Softcover"-Modul, d.h., dass der Airbag nur in einem Textilsack untergebracht ist. Hier wird eine Abdeckung mit einem im Sitzschaum integrierten Schaumlappen zur ebenflächigen Abdeckung verwendet. Die erfindungsgemäße Lösung des Problems bei Verwendung des kostengünstigen Softcover-Modules ist der in Fig. 26 und 27 gezeigte Deckel 93, der mit einem Teil von angeformten Clipsen 95 in einem Sitzschaum 94 eingeschäumt wird oder alternativ nach Montage des Airbags mit Clipsen 95 in Schlitze im Sitzschaum eingesteckt wird, wie im Schnittbild in der Fig. 27 gezeigt ist. Die Clipse sind mittels eines Filmscharniers 97 am Deckel 93 integriert und damit um 90 Grad klppbar. Vorteil ist eine wesentliche Kostenersparnis im Vergleich zum Hardcover-Gehäuse und eine Einsparung in der Sitzbreite gegenüber dem Softcovermodul mit einem wesentlich dickeren Schaumlappen.

Ein weiterer Erfindungsaspekt zu diesem Thema ist die Umstellung einer häufig verwendeten Manschettenart auf die Reißmanschettentechnik, um trotz einer ungeschwächten Airbagnaht eine wesentlich "robustere" Naht zu erhalten. In den Fig. 28 bis 36 sind die einzelnen Optimierungsschritte gezeigt, bei denen jeder einzelne Schritt einen auch eigenständigen Aspekt der Erfindung darstellt, deren Gesamtheit dann zum optimalen Ergebnis führt. Grundlage der Betrachtung ist die EP 0 782 944 Al. Diese Technik wird bei den meisten gegenwärtigen TO YOT A- Autos und vielen anderen zur Zeit in Verbindung mit einer geschwächten Air-bagaufreißnaht 101 verwendet, wie aus der Praxis bekannt ist. Da bei dieser Technik der Airbag 103 sehr empfindlich auf die Festigkeit der Naht reagiert, mussten schon Rückholaktionen durchgeführt werden. Betrachtet wird die Ausführung, bei der das Innenteil des Sitzbezuges partiell verstärkt wird und ein Teil der Öffiiungskraft des Bags über ein breites Band 99 auf eine geschwächte Aufreißnaht 101 geleitet wird (siehe EP O 782 944 A1, darin insbesondere Fig. 12 und andere).

Schritt 1 : Eine Sitzwangenverstärkung und das Band 99 werden aus einem Stück 98 hergestellt. Zugeklappt werden beide Enden mit der Airbagaufreißnaht 101 vernäht wie in den Fig. 32 schematisch gezeigt ist. Das ist eine Kosteneinsparung. Schritt 2: Wie Schritt 1; es wird jedoch das Band 99 an dessen Ende so zugeschnitten, dass zwei Reißbänder 100 entstehen (siehe Fig. 29). Diese Reißbänder 100 sind etwas breiter als die Stichlänge der Airbagnaht 101, damit sie je ein bis zwei Stiche 102 durchreißen. Rund um die beiden Nahtrisse entsteht durch Laufmaschen ein Loch als Beginn des Airbagdurchtritts (nicht gezeigt). Das erleichtert dem Airbag 103 die Öffnung der Naht um mindestens den Faktor 2!

Schritt 3: Eine Manschette 104 wird so verbreitert, dass über die gesamte Breite weitere Reißbänder 100 zugeschnitten/gelasert werden (siehe Fig. 30). Das ergibt beim Crash entsprechend viele auf die Nahtlänge verteilte Nahtdurchrisse. Die Fig. 32 zeigt das Schema der Klappung um den Airbag. Die Reißbänder 100 werden an der Kante mit dem Unterteil der Manschette zur Fixierung beim Nähen und um die Querfaden beim Crash nicht ausreißen zu lassen heiß verschweißt (siehe Fig. 31). Nachteilig bei der aus der Praxis vorbekannten Gestaltung ohne die vorliegende Erfindung ist, dass der sich entfaltende Airbag 103 bis zur Airbagnaht 101 einen Weg zurücklegen muss. Das kostet sicherheitsrelevante Zeit. Außerdem entfaltet sich der Airbag 103 gleichzeitig nach unten und oben, wie gezeigt ist, und wird ober- und unterhalb der Manschette 104 in seiner Entfaltung nach vorne gebremst. Ohne die punktuellen Einrisse hat es der Airbag schwer, die Airbagnaht 101 ober- und unterhalb der Manschette 104 aufzureißen. Ein weiterer Nachteil bei der vorbekannten Gestaltung ist die Nahtöffnung gleichzeitig mit dem Air- bagaustritt direkt am Kopf eines OOP-Kindes (out of position).

Eine Lösung ohne die aufgezeigten Nachteile ergibt sich durch die in den Fig. 33 bis 36 gezeigten Maßnahmen. Wie In der Fig. 33 gezeigt ist, wird das Band 99 mit den integrierten Reißbändern 100 zu dem Zweck durch einen Schlitz 106 gesteckt, dass der noch nicht entfaltete Airbag 103 bereits mit der Schlaufe 105 der Manschette 104 umgeben ist. Das Durchstecken der Bandes 99 ist schematisch in den Fig. 34 gezeigt. Eines der "endgültigen" Manschettenteile 104, so wie sie zugeschnitten sind, zeigt die Fig. 35. In der Fig. 36 ist gezeigt, wie der Airbag am Anfang seiner in diesem Stadium kraftvollsten Entfaltung bereits beginnt, die Reißbänder 100 zurückzuziehen, und damit in die Airbagnaht 101 punktweise Löcher reißt. Wenn der Airbag 103 an der Airbagnaht 101 ankommt, ist die Naht bereits bis auf die Laufmaschenabschnitte offen, die erfahrungsgemäß keinen nennenswerten Widerstand leisten. Das ist positiv für die Entfaltungsgeschwindigkeit des Airbags 103 und die Verletzungswerte des OOP-Kindes (nicht gezeigt). Erfahrungsgemäß entfaltet sich der Airbag 103 wesentlich nach oben und unten, währen er durch das gerissene Loch in der Airbagnant 101 durchtritt. Dabei "schält" er die Öffnung der Airbagnaht 101 weiter nach dem Gesetz der Laufmasche größer, was wesentlich einfacher geht, als von innen stumpf gegen die noch geschlossene Airbagnaht 101 zu drücken.

Die am Schluss beschriebene Öffnungstechnik ergäbe bei heutigen Randbedingungen eine um den Faktor 8 (III) geringere Öffnungsleistung des Airbags 103. Deshalb ist es sinnvoll, die Airbagnaht 101 nicht zu schwächen und immer noch eine Toleranz aller Festigkeitseinflüsse der Airbagaufreißnaht von 400% zu haben. 100% Minderung davon können für eine "Doppelkappnaht" verwendet werden, da bei dieser die Reißbänder 100 "doppelt" vernäht werden.

In der Fig. 37 ist eine alternative Veränderung der Reißbänder 107 bis 113 gezeigt, um das Entfaltungsverhalten des Airbags zu optimieren und in bestimmten Grenzen zu steuern. Hierzu werden die Reißbänder 107 bis 113 unterschiedlich ausgelegt. Die Reißbänder 108, 110, 112, 113 reißen optimal schnell Laufmaschen in die Aufreißnaht 114 als Phase 1. Als Phase 2 werden dann die Reißbänder 107, 109, und 111 in ihrer Länge gestreckt und reißen dann erst "ihre" Laufmaschen in die Airbagaufreißnaht 114. Diese Maßnahme verteilt die Öffhungskraft der Airbags 115 und 116 in der Zeit und halbiert damit die Spitzenkraft zur Öffnung der Airbagaufreißnaht 114. In einer Phase 3 werden dann in der Airbagaufreißnaht 114 größere Durchtrittslöcher gerissen. Hierzu sind alternativ zwischen den Reißbändern 107 bis 119 Stege 117 bis 119 angebracht. Wenn man die Stege 117 bis 119 weglässt, gibt es nur Laufmaschenlöcher, was den oberen Airbag als Beispiel etwas abbremst. An den Reißbändern 112 und 113 sind alternativ einseitig oder zweiseitig Lappen 120 bzw. 121 angebracht, die von der Laufmasche aus beginnend Löcher reißen (nicht gezeigt). Durch die vor dem Airbagdurchtritt geöffnete Aufreißnaht 114 bewegt sich der Airbag 115 und 116 weniger aggressiv nach vorne und die vorgegebene Lage des Loches steuert die Richtung der Entfaltung des Bags in gewissen Grenzen, was sehr wichtig ist bei dem unteren Airbag 115 zur Balance zwischen Schutzwirkung und Verletzungen durch falsche Positionierung von Kindern, was exakt geregelt ist in OOP- (out of position) Vorschriften. Die Zwischenstege 122 sind angebracht, nur um das Loch zwischen den Reißbändern zu verkleinern, um ein "Verhängen" des Airbags 116 darin zu vermeiden. An den Endpunkten 123 der Reißbänder 107 bis 113 sind diese jeweils kreuzförmig verlängert, damit hierdurch die Fäden beim reißen der Reißbänder nicht ausreißen. Damit wird die Kammscherfestigkeit verbessert.

Die Fig. 38 zeigt eine weitere alternative Ausführung der Reißbänder 128 bis 130. Vorteil dieser Maßnahme ist, dass während des Crashs größere Löcher "geschält" werden und damit der Durchgang des Airbags 127 erleichtert wird. Hierzu wird das Reißband 128 in etwa rechtem Winkel umgelegt und in dieser Position an der Kante durch Heiß-Verschweißen fixiert als Vorzusammenbau zur einstückigen Verwendung der Mehrfach-Reißbänder zum Einnähen. Bei dem Reißband 129 wird in der ersten Phase des Ziehens ein Steg 131 aus der Ausreißnaht 114 herausgerissen. Die beiden Löcher 132 und 133 geben dazu den nötigen Hub frei. In der nächsten Phase schälen Lappen 134 und 135 zwei große Löcher in die Aufreißnaht 114. Beim Reißband 130 wird die zuvor genannte Reißmechanik wie gezeigt nach einer Seite durchgeführt. Weitere Ausfuhrungen mit gleichem physikalischen Hintergrund wurden erprobt und stellen weitere Alternativen dar.

Die Fig. 39 und 40 zeigen als Zusammenfassung schematisch im Schnitt die Auswirkung einer heutigen Manschette 124 auf die Airbagentfaltung. Die Fig. 39 zeigt den Ruhezustand, wie die heutige Manschette 124 um das Airbagmodul 125 gelegt ist und in zwei extra Teilen in sich und mit der Airbagnaht 114 am Sitzbezug 126 vernäht wird. Die Fig. 40 zeigt, dass sich der Airbag 127 beim Crash geradeaus in Richtung gegen die Aufreißnaht 114 und gegen den Kopf des OOP-Kindes (out of position) entfaltet und direkt am Kopf die Aufreißnaht 114 öffnet.

Die Fig. 41 und 42 zeigen als Zusammenfassung schematisch im Schnitt die Wirkung der Reißbänder 107 bis 113 auf OOP (out of position). Die als Manschette zusammengeführten Reißbänder 124 sind im Ruhestand in den Fig. 41 gezeigt. Bei Entfaltung des Airbags 127 wird mittels der Reißbänder 107 bis 113 die Airbagaufreißnaht zurückgezogen durch die "Umlenkung" durch die Schlitze im Unterteil der Reißbandmanschette, und damit in Gegenrichtung zur Entfaltung des Airbags 127 geöffnet. Das Verletzungsrisiko bei OOP ist geringer, da der Airbag 127 durch die vorgeöffnete Naht "weich" durchtreten kann.

Eine weitere Aufgabe bei den Airbagmodulen ist die Erreichung einer niedrigen Bauhöhe und eine schraubfreie Montage von "außen" zur Kosteneinsparung. Heutige Module haben einen rohrförmigen Mantel aus Blech rund um die Gasaustrittslöcher des Generators, damit das Air-baggewebe nicht verbrennt. Die Befestigung des Moduls wird üblicherweise separat mit Ge-windebolzen durchgeführt. Die vorliegende Erfindung zeigt in einem insbesondere auch eigenständig erfinderischen Aspekt zwei Beispiele, wie man die Befestigung des Moduls als integralen Bestandteil des Hitzeschildes herstellt.

Fig. 43 zeigt eine entsprechend ausgestanzte Blechplatine 138. In der Blechplatine 138 ist ein Haken 139 und ein Clips 140 integriert. Sie werden in einem zweiten Schritt dem Zweck entsprechend abgewinkelt. Weiter ist beidseitig eine Verkrallung 141 angebracht, die die beim Umformen zu einem Rohr 142 eine mechanische Verbindung herstellt. Um eine geringe Bauhöhe zu erreichen, wird das Rohr 142 oval gedrückt wie in der Fig. 44 gezeigt ist. Ein Laserschweißstrahl verbindet die beiden Rohrhälften 122 miteinander und mit einem Generator 143. Zur optimalen Verschweißung ist die Verkrallung 141 so mit Aussparungen 144 versehen, dass in einem Arbeitsgang das Rohr an sich und mit dem Generator verschweißt werden kann. Dieser Zusammenbau wird mit dem Haken und dem Clips durch Schlitze im Airbagge-webe gesteckt, die vorzugsweise alternativ mit Heißmesserzangen geschnitten werden, (nicht gezeigt). Das Airbagmodul 125 wird dann mit dem Haken 139 in einen Schlitz in der Sitzlehne eingeschoben und danach in das Befestigungsloch in der Lehne eingeschwenkt (nicht gezeigt). Wenn die Verclipsung nicht korrekt durchgeführt wurde, steht das Modul schräg aus der Oberfläche des Sitzbezuges heraus.

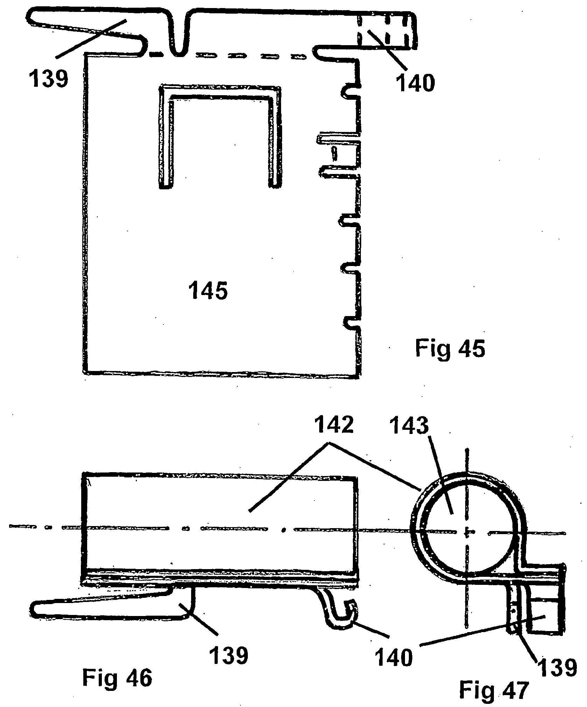

Die Fig. 45 bis 47 zeigen als weiteres Beispiel eine Version der Haken/Clipsintegration, bei der eine heutige Version zu Grunde liegt, bei der die beiden Schraubbolzen durch Haken 139 und Clips 140 ersetzt wurden. Die Fig. 45 zeigt die entsprechend geänderte Blechplatine, die Fig. 46 zeigt den Zusammenbau von der Seite, und die Fig. 47 zeigt den Zusammenbau aus axialer Richtung. Alternativ kann der Clips 140 auch durch einen separaten Spreizdübel, einen separaten "Blechklammerclips" oder ähnliches ersetzt werden. Das erfordert eine größere Blechplatine und mehr Handgriffe.

## Patentansprüche

1. Airbagmodul (18) mit einem Reißband (13, 55, 68, 83, 84, 107, 108, 109, 110, 111, 112, 113, 128, 129, 130) zur gezielten Öffnung eines Sitzbezuges (20), unter dem das Airbagmodul zu montieren ist,
wobei eine Mehrzahl von Reißbändern (13, 55, 68, 83, 84, 107, 108, 109, 110, 111, 112, 113, 128, 129, 130) vorgesehen ist, wobei eine Reißbandbreite und eine Stichlänge derart abgestimmt sind, dass einerseits pro Reißband nur wenige Stiche (102) erfasst sind, und andererseits die Stiche (102) nicht neben das Reißband (13, 55, 68, 83, 84, 107, 108, 109, 110, 111, 112, 113, 128, 129, 130) gesetzt sind,
**dadurch gekennzeichnet, dass** pro Reißband (13, 55, 68, 83, 84, 107, 108, 109, 110, 111, 112, 113, 128, 129, 130) nur ein Stich (102) erfasst ist.

2. Airbagmodul (18) nach Anspruch 1, **dadurch gekennzeichnet, dass** es eine Gewebebahn (14) enthält, in der die mehreren Reißbänder (13, 55, 68, 83, 84, 107, 108, 109, 110, 111, 112, 113, 128, 129, 130) ausgebildet sind.

3. Airbagmodul (18) nach Anspruch 2, **dadurch gekennzeichnet, dass** in der Gewebebahn (14) wenigstens zwei Reißbänder (13) zu einem breiten Band (37) zusammengefasst sind.

4. Airbagmodul (18) nach einem der vorhergehenden Ansprüche, **dadurch gekennzeichnet, dass** eine Reißbandmanschette (40, 56, 71) derart mit Positionierlöchern versehen ist, dass eine Positionierung der gefalteten Reißbandmanschette (40, 56, 71) mit Positionierstiften gewährleistet ist.

5. Airbagmodul (18) nach einem der vorhergehenden Ansprüche, **dadurch gekennzeichnet, dass** die Reißbandmanschette (40, 56, 71) derart ausgebildet ist, dass nur ein Teil der Energie des Airbags (103, 115, 116) von den Reißbändern (13, 55, 68, 83, 84, 107, 108, 109, 110, 111, 112, 113, 128, 129, 130) aufzunehmen ist, wobei durch die Reißbänder (13, 55, 68, 83, 84, 107, 108, 109, 110, 111, 112, 113, 128, 129, 130) ein punktweises Zuführen einer Kraft in die Airbagnaht aufbringbar ist, zum frühzeitigen Zuführen der Airbagkraft auf die Reißbänder (13, 55, 68, 83, 84, 107, 108, 109, 110, 111, 112, 113, 128, 129, 130).

6. Airbagmodul (18) nach Anspruch 5, **dadurch gekennzeichnet, dass** die Reißbänder (13, 55, 68, 83, 84, 107, 108, 109, 110, 111, 112, 113, 128, 129, 130) durch Schlitze in der Reißbandmanschette (40, 56, 71) geführt sind.

7. Airbagmodul (18) nach einem der vorhergehenden Ansprüche, **dadurch gekennzeichnet, dass** die Reißbandmanschette (40, 56, 71) derartig ausgebildet ist, dass ein Anteil der Energie des Airbags (103, 115, 116) auf die Airbagnaht (101) verteilbar ist und nicht für das Reißen von Laufmaschenlöchern In der Airbagnaht (101) vorgesehen ist.

8. Airbagmodul (18) nach einem der vorhergehenden Ansprüche, **dadurch gekennzeichnet, dass** gleichzeitig die Energie des Airbags (103, 115, 116) an der Airbagaustrittsnaht (70) auf die Reißbänder (13, 55, 68, 83, 84, 107, 108, 109, 110, 111, 112, 113, 128, 129, 130) und auf die Airbagaustrittsnaht (70) direkt verteilbar ist.

9. Airbagmodul (18) nach einem der vorherigen Ansprüche, **dadurch gekennzeichnet, dass** die Reißbänder (13, 55, 68, 83, 84, 107, 108, 109, 110, 111, 112, 113, 128, 129, 130) mindestens zwei benachbarte Stiche (102) erfassen zum Ausbilden von größeren Löchern in der Aufreißnaht (101, 114).

10. Airbagmodul (18) nach Anspruch 9, **dadurch gekennzeichnet, dass** die Reißbänder (13, 55, 68, 83, 84, 107, 108, 109, 110, 111, 112, 113, 128, 129, 130) derart ausgeführt sind, dass in einer ersten Phase beim Zünden des Airbags (103, 115, 116) kleine Laufmaschenlöcher ausbildbar sind durch Aufreißen jeweils eines Stichs (102) durch ein Reißband (13, 55, 68, 83, 84, 107, 108, 109, 110, 111, 112, 113, 128, 129, 130), und in einer zweiten Phase ein größeres Loch (132, 133, 136) mit mehr als einem Stich (102) ausschälbar ist.

11. Airbagmodul (18) nach Anspruch 10, **dadurch gekennzeichnet, dass** zumindest einige Reißbänder (13, 55, 68, 83, 84, 107, 108, 109, 110, 111, 112, 113, 128, 129, 130) seitlich mit unterschiedlichen in die Naht eingenähten Lappen (120, 121, 134, 135, 137) versehen sind zum Reißen der Löcher (132, 133, 136) in der zweiten Phase, wobei die Lappen (120, 121, 134, 135, 137) mit einem, zwei oder mehreren Stegen (117-119, 131) angebunden sind.

12. Airbagmodul (18) nach einem der vorherigen Ansprüche, **dadurch gekennzeichnet, dass** eine Abstimmung des zeitlichen Reißmomentes bei einem Bündel von Reißbändern (13, 55, 68, 83, 84, 107, 108, 109, 110, 111, 112, 113, 128, 129, 130) durch deren Führung und in eine Länge derart vorgesehen ist, dass sie nacheinander die Löcher (132, 133, 136) reißen zum Niedrighalten einer Lastspitze des Airbags (103, 115, 116).

13. Fahrzeugsitz mit einem Airbagmodul (18) nach einem der vorherigen Ansprüche.

14. Montageverfahren für ein Airbagmodul (18) nach einem der Ansprüche 1 bis 12,
wobei eine Reißbandmanschette (40, 56, 71) eingesetzt wird, die derart zugeschnitten ist, dass Kettfäden (58) oder Schussfäden (59) gesteuert durch den Zuschnitt jeweils in der Zugrichtung der Reißkraft zu liegen kommen zur Vermeidung eines seitlichen Ausscherens der Fäden.

15. Verfahren nach Anspruch 14, **dadurch gekennzeichnet, dass** die Reißbänder (13, 55, 68, 83, 84, 107, 108, 109, 110, 111, 112, 113, 128, 129, 130) in einem rechten Winkel zueinander angeordnet werden, wobei die die Kraft aufnehmenden Schussfäden (59) oder Kettfäden (58) zur Aufnahme der Reißkraft ausgebildet werden.

16. Verfahren nach Anspruch 14 oder 15, **dadurch gekennzeichnet, dass** die Reißbänder (13, 55, 68, 83, 84, 107, 108, 109, 110, 111, 112, 113, 128, 129, 130) mit einem Quersteg miteinander verbunden sind und diese Einheit vor einem Verbindungsverfahren, insbesondere Schweißverfahren, in einem Positionierblech eingehängt wird.

17. Verfahren nach einem der Ansprüche 15 bis 16, **dadurch gekennzeichnet, dass** die Reißbandmanschette (40, 56, 71) derart mit Positionierlöchern versehen wird, dass die gefaltete Reißbandmanschette (40, 56, 71) zur exakten Positionierung in Positionierstifte gesetzt werden kann, insbesondere für einen nachfolgenden Vorgang des Verbindens.

18. Verfahren nach einem der Ansprüche 14 bis 17, **dadurch gekennzeichnet, dass** die Reißbandmanschette (40, 56, 71) derart verwendet wird, dass der Anfang der Nähposition mit einer Positionierfahne vorgegeben wird.

19. Verfahren nach einem der Ansprüche 14 bis 18, **dadurch gekennzeichnet, dass** die Reißbänder (13, 55, 68, 83, 84, 107, 108, 109, 110, 111, 112, 113, 128, 129, 130) selbsttätig in ein Positionierblech oder Halteblech fallen zur Vorbereitung einer exakten Position der Reißbänder (13, 55, 68, 83, 84, 107, 108, 109, 110, 111, 112, 113, 128, 129, 130).

20. Verfahren nach einem der Ansprüche 14 bis 19, **dadurch gekennzeichnet, dass** Schnittstellen von Last tragenden Verbindungen von Kett- und Schussfäden 58, 59) derart ausgeführt werden, dass ihre Kreuzungen als jeweils überschießende Materiallänge in Kett- und Schussrichtung erstellt werden zum Verhindern eines Ausreißens.

21. Verfahren nach einem der Ansprüche 14 bis 20, **dadurch gekennzeichnet, dass** eine Anbindung des Airbagmoduls (18) derart erfolgt, dass das Airbagmodul (18) zur Befestigung eingesteckt und verclipst wird.

22. Verfahren nach Anspruch 21, **dadurch gekennzeichnet, dass** ein Clip (95, 140) der Verclipsung zur Befestigung und Lagesicherung des Airbagmoduls (18) an einer Struktur der Lehne (2) des Fahrzeugsitzes eingesetzt wird.

## Claims

1. Airbag module (18) having a tearing strip (13, 55, 68, 83, 84, 107, 108, 109, 110, 111, 112, 113, 128, 129, 130) for the targeted opening of a seat cover (20) under which the airbag module is to be fitted,
wherein a plurality of tearing strips (13, 55, 68, 83, 84, 107, 108, 109, 110, 111, 112, 113, 128, 129, 130) is provided, and wherein a tearing-strip width and a stitch length are coordinated in such a way that, on the one hand, only a few stitches (102) are included per tearing strip and, on the other hand, said stitches (102) are not placed next to the tearing strip (13, 55, 68, 83, 84, 107, 108, 109, 110, 111, 112, 113, 128, 129, 130),
**characterised in that**
only one stitch (102) is included per tearing strip (13, 55, 68, 83, 84, 107, 108, 109, 110, 111, 112, 113, 128, 129, 130).

2. Airbag module (18) according to Claim 1,
**characterised in that**
it contains a fabric web (14) within which the plurality of tearing strips (13, 55, 68, 83, 84, 107, 108, 109, 110, 111, 112, 113, 128, 129, 130) are formed.

3. Airbag module (18) according to Claim 2,
**characterised in that**,
within the fabric web (14), at least two tearing strips (13) are combined to form a wide strip (37).

4. Airbag module (18) according to one of the preceding claims,
**characterised in that**
a tearing-strip sleeve (40, 56, 71) is provided with positioning holes in such a way that positioning of the folded tearing-strip sleeve (40, 56, 71) is guaranteed by means of positioning pins.

5. Airbag module (18) according to one of the preceding claims,
**characterised in that**
the tearing-strip sleeve (40, 56, 71) is formed in such a way that only part of the energy of the airbag (103, 115, 116) is to be absorbed by the tearing strips (13, 55, 68, 83, 84, 107, 108, 109, 110, 111, 112, 113, 128, 129, 130), it being possible to apply the feeding of a force into the airbag seam at certain points by said tearing strips (13, 55, 68, 83, 84, 107, 108, 109, 110, 111, 112, 113, 128, 129, 130) for the early feeding-in of the airbag force to said tearing strips (13, 55, 68, 83, 84, 107, 108, 109, 110, 111, 112, 113, 128, 129, 130).

6. Airbag module (18) according to Claim 5,
**characterised in that**
the tearing strips (13, 55, 68, 83, 84, 107, 108, 109, 110, 111, 112, 113, 128, 129, 130) are routed through slits in the tearing-strip sleeve (40, 56, 71).

7. Airbag module (18) according to one of the preceding claims,
**characterised in that**
the tearing-strip sleeve (40, 56, 71) is formed in such a way that a portion of the energy of the airbag (103, 115, 116) can be distributed to the airbag seam (101) and is not intended for tearing ladder holes in said airbag seam (101).

8. Airbag module (18) according to one of the preceding claims,
**characterised in that**
the energy of the airbag (103, 115, 116) at the airbag exit seam (70) can be distributed directly to the tearing strips (13, 55, 68, 83, 84, 107, 108, 109, 110, 111, 112, 113, 128, 129, 130) and to said airbag exit seam (70) simultaneously.

9. Airbag module (18) according to one of the preceding claims,
**characterised in that**
the tearing strips (13, 55, 68, 83, 84, 107, 108, 109, 110, 111, 112, 113, 128, 129, 130) include at least two adjacent stitches (102) for forming larger holes in the tearing-open seam (101, 114).

10. Airbag module (18) according to Claim 9,
**characterised in that**
the tearing strips (13, 55, 68, 83, 84, 107, 108, 109, 110, 111, 112, 113, 128, 129, 130) are designed in such a way that, in a first phase when the airbag (103, 115, 116) is detonated, small ladder holes can be formed as a result of the tearing-open of one stitch (102), in each case, by a tearing strip (13, 55, 68, 83, 84, 107, 108, 109, 110, 111, 112, 113, 128, 129, 130) and, in a second phase, a larger hole (132, 133, 136) can be peeled out with more than one stitch (102).

11. Airbag module (18) according to Claim 10,
**characterised in that**
at least some tearing strips (13, 55, 68, 83, 84, 107, 108, 109, 110, 111, 112, 113, 128, 129, 130) are provided, at the sides, with different tabs (120, 121, 134, 135, 137), which are stitched into the seam, for tearing the holes (132, 133, 136) in the second phase, said tabs (120, 121, 134, 135, 137) being attached to one, two or more webs (117 - 119, 131).

12. Airbag module (18) according to one of the preceding claims,
**characterised in that**
provision is made for coordination of the chronological moment of tearing in a bundle of tearing strips (13, 55, 68, 83, 84, 107, 108, 109, 110, 111, 112, 113, 128, 129, 130) as a result of the routing thereof and in a length such that they tear the holes (132, 133, 136) one after another for the purpose of keeping a peak load of the airbag (103, 115, 116) low.

13. Vehicle seat having an airbag module (18) according to one of the preceding claims.

14. Method of fitting an airbag module (18) according to one of Claims 1 to 12,
wherein a tearing-strip sleeve (40, 56, 71) is used which is cut to size in such a way that warp threads (58) or weft threads (59) come to lie, in each case, in the direction of pulling of the tearing force in a manner controlled by the blank, in order to avoid lateral moving-out of the threads.

15. Method according to Claim 14,
**characterised in that**
the tearing strips (13, 55, 68, 83, 84, 107, 108, 109, 110, 111, 112, 113, 128, 129, 130) are arranged at a right angle to one another, the weft threads (59) or warp threads (58) which absorb the force being designed to absorb the tearing force.

16. Method according to Claim 14 or 15,
**characterised in that**
the tearing strips (13, 55, 68, 83, 84, 107, 108, 109, 110, 111, 112, 113, 128, 129, 130) are connected to one another by means of a transverse web and this unit is hooked into a metal positioning sheet prior to a connecting process, in particular a welding process.

17. Method according to either of Claims 15 or 16,
**characterised in that**
the tearing-strip sleeve (40, 56, 71) is provided with positioning holes in such a way that the folded tearing-strip sleeve (40, 56, 71) can be placed in positioning pins for precise positioning purposes, in particular for a subsequent connecting operation.

18. Method according to one of Claims 14 to 17,
**characterised in that**
the tearing-strip sleeve (40, 56, 71) is used in such a way that the start of the stitching position is specified by means of a positioning flag.

19. Method according to one of Claims 14 to 18,
**characterised in that**
the tearing strips (13, 55, 68, 83, 84, 107, 108, 109, 110, 111, 112, 113, 128, 129, 130) automatically drop into a metal positioning sheet or metal holding sheet for setting up a precise position of said tearing strips (13, 55, 68, 83, 84, 107, 108, 109, 110, 111, 112, 113, 128, 129, 130).

20. Method according to one of Claims 14 to 19,
**characterised in that**
interfaces of load-bearing connections of warp and weft threads (58, 59) are designed in such a way that their crossing points are produced in the form of an excessive length of material in the directions of the warp and weft in each case, for the purpose of preventing tearing-out.

21. Method according to one of Claims 14 to 20,
**characterised in that**
attachment of the airbag module (18) takes place in such a way that said airbag module (18) is inserted and clipped for fastening purposes.

22. Method according to Claim 21,
**characterised in that**
a clip (95, 140) belonging to the clipping system is used for fastening the airbag module (18) to, and securing it in position on, a structure belonging to the backrest (2) of the vehicle seat.

## Revendications

1. Module d'airbag (18) avec une bande de rupture (13, 55, 68, 83, 84, 107, 108, 109, 110, 111, 112, 113, 128, 129, 130) pour une ouverture ciblée d'un revêtement de siège (20), sous lequel le module d'airbag est à monter,
une pluralité de bandes de rupture (13, 55, 68, 83, 84, 107, 108, 109, 110, 111, 112, 113, 128, 129, 130) étant prévues, une largeur de bande de rupture et une longueur de point étant coordonnées de façon que, d'une part, quelques points (102) seulement sont agrippés par une bande de rupture et, d'autre part, les points (102) ne sont pas placés à côté de la bande de rupture (13, 55, 68, 83, 84, 107, 108, 109, 110, 111,112, 113, 128, 129, 130),
**caractérisé en ce que** par bande de rupture (13, 55, 68, 83, 84, 107, 108, 109, 110, 111, 112, 113, 128, 129, 130) n'est agrippé qu'un seul point (102).

2. Module d'airbag (18) suivant la revendication 1, **caractérisé en ce qu**'il contient un panneau de tissu (14), dans lequel sont conçues les plusieurs bandes de rupture (13, 55, 68, 83, 84, 107, 108, 109, 110, 111, 112, 113, 128, 129, 130).

3. Module d'airbag (18) suivant la revendication 2, **caractérisé en ce qu**'au moins deux bandes de rupture (13) sont réunies dans le panneau de tissu (14) de façon à former une bande large (37).

4. Module d'airbag (18) suivant une des revendications précédentes, **caractérisé en ce qu**'une manchette de bande de rupture (40, 56, 71) est pourvue de trous de positionnement de façon à assurer un positionnement de la manchette de bande de rupture pliée (40) 56, 71) par l'intermédiaire de tiges de positionnement.

5. Module d'airbag (18) suivant une des revendications précédentes, **caractérisé en ce que** la manchette de bande de rupture (40, 56, 71) est conçue de façon qu'une partie seulement de l'énergie de l'airbag (103, 115, 116) est à absorber par les bandes de rupture (13, 55, 68, 83, 84, 107, 108, 109, 110, 111, 112, 113, 128, 129, 130), les bandes de rupture (13, 55, 68, 83, 84, 107, 108, 109, 110, 111, 112, 113, 128, 129, 130) permettant d'introduire de façon ponctuelle une force dans la couture d'airbag pour une transmission précoce de la force de l'airbag aux bandes de rupture (13, 55, 68, 83, 84, 107, 108, 109, 110, 111, 112, 113, 128, 129, 130).

6. Module d'airbag (18) suivant la revendication 5, **caractérisé en ce que** les bandes de rupture (13, 55, 68, 83, 84, 107, 108, 109, 110, 111, 112, 113, 128, 129, 130) sont passées à travers des fentes dans la manchette de bande de rupture (40, 56, 71).

7. Module d'airbag (18) suivant une des revendications précédentes, **caractérisé en ce que** la manchette de bande de rupture (40, 56, 71) est conçue de façon qu'une partie de l'énergie de l'airbag (103, 115, 116) peut être répartie sur la couture de l'airbag (101) et n'est pas prévue pour former des trous de mailles coulées dans la couture de l'airbag (101).

8. Module d'airbag (18) suivant une des revendications précédentes, **caractérisé en ce qu**'en même temps, l'énergie de l'airbag (103, 115, 116) peut être répartie, au niveau de la couture de sortie de l'airbag (70), sur les bandes de rupture (13, 55, 68, 83, 84, 107, 108, 109, 110, 111, 112, 113, 128, 129, 130) et directement sur la couture de sortie de l'airbag (70).

9. Module d'airbag (18) suivant une des revendications précédentes, **caractérisé en ce que** les bandes de rupture (13, 55, 68, 83, 84, 107, 108, 109, 110, 111, 112, 113, 128, 129, 130) agrippent au moins deux points voisins (102) pour former des trous plus importants dans la couture déchirable (101, 114).

10. Module d'airbag (18) suivant la revendication 9, **caractérisé en ce que** les bandes de rupture (13, 55, 68, 83, 84, 107, 108, 109, 110, 111, 112, 113, 128, 129, 130) sont conçues de façon qu'au cours d'une première phase, des petites mailles coulées peuvent être formées par déchirement d'un point (102) respectivement par une bande de rupture (13, 55, 68, 83, 84, 107, 108, 109, 110, 111, 112, 113, 128, 129, 130) au déclenchement de l'airbag (103, 115, 116), et, au cours d'une seconde phase, un trou plus important (132, 133, 136) de plus d'un point (102) peut être formé.

11. Module d'airbag (18) suivant la revendication 10, **caractérisé en ce qu**'au moins quelques bandes de rupture (13, 55, 68, 83, 84, 107, 108, 109, 110, 111, 112, 113, 128, 129, 130) sont pourvues de languettes latérales différentes prises dans la couture (120, 121, 134, 135, 137) pour la formation des trous (132, 133, 136) au cours de la seconde phase, les languettes (120, 121, 134, 135, 137) étant attachées par l'intermédiaire d'un, de deux ou de plusieurs ponts (117-119, 131).

12. Module d'airbag (18) suivant une des revendications précédentes, **caractérisé en ce que** pour un ensemble de bandes de rupture (13, 55, 68, 83, 84, 107, 108, 109, 110, 111, 112, 113, 128, 129, 130) est prévue une coordination du moment temporel de rupture par l'intermédiaire de leur guidage et sur une longueur de façon qu'elles forment les trous (132, 133, 136) l'un après l'autre pour maintenir faible un pic de charge de l'airbag (103, 115, 116).

13. Siège de véhicule avec un module d'airbag (18) suivant une des revendications précédentes.

14. Procédé de montage pour un module d'airbag (18) suivant une des revendications 1 à 12,
le procédé utilisant une manchette de bande de rupture (40, 56, 71) qui est découpée de façon que des fils de chaîne (58) ou des fils de trame (59), commandés par la découpe, viennent se poser respectivement dans la direction de traction de la force de rupture pour empêcher un déport latéral des fils.

15. Procédé suivant la revendication 14, **caractérisé en ce que** les bandes de rupture (13, 55, 68, 83, 84, 107, 108, 109, 110, 111, 112, 113, 128, 129, 130) sont disposées de façon à former un angle droit les unes avec les autres, les fils de trame (59) ou les fils de chaîne (58) absorbant la force étant conçus pour absorber la force de rupture.

16. Procédé suivant la revendication 14 ou 15, **caractérisé en ce que** les bandes de rupture (13, 55, 68, 83, 84, 107, 108, 109, 110, 111, 112, 113, 128, 129, 130) sont reliées entre elles par l'intermédiaire d'un pont transversal et **en ce que** l'unité ainsi formée est accrochée dans un dispositif de positionnement préalablement à un procédé d'assemblage, en particulier à un procédé de soudage.

17. Procédé suivant une des revendications 15 à 16, **caractérisé en ce que** la manchette de bande de rupture (40, 56, 71) est pourvue de trous de positionnement de façon que la machette de bande de rupture pliée (40, 56, 71) peut être placée dans des tiges de positionnement pour un positionnement exact, en particulier pour le processus d'assemblage qui suit.

18. Procédé suivant une des revendications 14 à 17, **caractérisé en ce que** la manchette de bande de rupture (40, 56, 71) est utilisée de façon que le début de la position de couture est prédéterminé avec un drapeau de positionnement.

19. Procédé suivant une des revendications 14 à 18, **caractérisé en ce que** les bandes de rupture (13, 55, 68, 83, 84, 107, 108, 109, 110, 111, 112, 113, 128, 129, 130) tombent automatiquement dans un dispositif de positionnement ou de maintien pour la préparation d'une position exacte des bandes de rupture (13, 55, 68, 83, 84, 107, 108, 109, 110, 111, 112, 113, 128, 129, 130).

20. Procédé suivant une des revendications 14 à 18, **caractérisé en ce que** les points d'intersection d'assemblages porteurs de charge de fils de chaîne et de trame (58, 59) sont conçus de façon que leurs croisements sont respectivement réalisés par une longueur de matériau excédante dans les sens de chaîne et de trame pour empêcher l'arrachage.

21. Procédé suivant une des revendications 14 à 20, **caractérisé en ce qu**'un attachement du module d'airbag (18) a lieu de façon que le module d'airbag est inséré et clipsé pour la fixation.

22. Procédé suivant la revendication 21, **caractérisé en ce qu**'un clips (95, 140) du clipsage est utilisé pour la fixation et le blocage de la position du module d'airbag (18) sur une structure du dossier (2) du siège de véhicule.
